(19) Europäisches Patentamt
European Patent Office
Office européen des brevets

(11) **EP 4 550 926 A1**

(12) **EUROPEAN PATENT APPLICATION**
published in accordance with Art. 153(4) EPC

(43) Date of publication:
**07.05.2025 Bulletin 2025/19**

(21) Application number: **23830409.1**

(22) Date of filing: **29.06.2023**

(51) International Patent Classification (IPC):
*H04W 76/14* (2018.01)

(52) Cooperative Patent Classification (CPC):
**H04W 72/0453; H04W 76/14; H04W 76/23**

(86) International application number:
**PCT/CN2023/103860**

(87) International publication number:
**WO 2024/002241 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.07.2022 CN 202210777450**

(71) Applicant: **Sharp Kabushiki Kaisha
Sakai City, Osaka 590-8522 (JP)**

(72) Inventors:
• **ZHAO, Yinan
Pudong, Shanghai 201206 (CN)**
• **LIU, Renmao
Pudong, Shanghai 201206 (CN)**
• **LUO, Chao
Pudong, Shanghai 201206 (CN)**

(74) Representative: **Müller Hoffmann & Partner
Patentanwälte mbB
St.-Martin-Straße 58
81541 München (DE)**

(54) **METHOD EXECUTED BY MEANS OF USER EQUIPMENT, AND USER EQUIPMENT**

(57) Provided in the present invention are a method performed by user equipment, and user equipment. The method performed by user equipment includes: determining one or more frequency locations within one SL BWP for S-SS/PSBCH block reception, wherein each frequency location corresponds to a center frequency of one subcarrier in one S-SS/PSBCH block, and a bandwidth of the S-SS/PSBCH block is within a bandwidth of a unique RB set within the SL BWP; and receiving the S-SS/PSBCH block in part or all of the one or more frequency locations.

FIG. 1

EP 4 550 926 A1

## Description

### TECHNICAL FIELD

The present invention relates to a method performed by user equipment, and user equipment.

### BACKGROUND ART

In a wireless communication system, UEs (user equipment) can perform sidelink (SL) communication with each other. The SL communication may include general device-to-device (D2D) communication, vehicle-to-vehicle (V2V) communication, vehicle-to-everything (V2X) communication, and the like.

In order to support SL communication on a licensed spectrum and/or an unlicensed spectrum, a series of issues need to be solved, such as channel access mechanisms, physical layer channel and/or signal structures, physical layer procedures (e.g., a synchronization procedure, and feedback and/or a determination mechanism), resource allocation and/or management, and coexistence with other systems.

Prior Art Documents

Non-Patent Documents

Non-Patent Document 1: RP-152293, New WI proposal: Support for V2V services based on LTE sidelink, 3GPP TSG RAN Meeting#70
Non-Patent Document 2: RP-170798, New WID on 3GPP V2X Phase 2, 3GPP TSG RAN Meeting#75
Non-Patent Document 3: RP-170855, New WID on New Radio Access Technology, 3GPP TSG RAN Meeting#75
Non-Patent Document 4: RP-190766, New WID on 5G V2X with NR sidelink, 3GPP TSG RAN Meeting#83
Non-Patent Document 5: RP-201385, WID revision: NR sidelink enhancement, 3GPP TSG RAN Meeting#88e
Non-Patent Document 6: RP-213678, New WID on NR sidelink evolution, 3GPP TSG RAN Meeting#94e

### SUMMARY OF THE INVENTION

In order to address at least part of the aforementioned issues, provided in the present invention are a method performed by user equipment, and user equipment. More than one frequency location for an S-SS/PSBCH block is allowed to be configured, and the S-SS/PSBCH block corresponding to each frequency location is within a bandwidth of a unique RB set within an SL BWP, so that the probability that the S-SS/PSBCH block can still be transmitted when one or more channel access failures occur within the SL BWP is greatly increased, thereby improving the stability of a synchronization procedure of an SL link.

According to the present invention, a method performed by user equipment is provided. The method is characterized by comprising: determining one or more frequency locations within one SL BWP for S-SS/PSBCH block reception, wherein each frequency location corresponds to a center frequency of one subcarrier in one S-SS/PSBCH block, and a bandwidth of the S-SS/PSBCH block is within a bandwidth of a unique RB set within the SL BWP; and receiving the S-SS/PSBCH block in part or all of the one or more frequency locations.

Furthermore, according to the present invention, provided is user equipment, comprising: a processor; and a memory, having instructions stored therein, wherein the instructions, when run by the processor, perform the above method.

Therefore, provided in the present invention is a method. More than one frequency location for an S-SS/PSBCH block is allowed to be configured, and the S-SS/PSBCH block corresponding to each frequency location is within a bandwidth of a unique RB set within an SL BWP, so that the probability that the S-SS/PSBCH block can still be transmitted when one or more channel access failures occur within the SL BWP is greatly increased, thereby improving the stability of a synchronization procedure of an SL link.

### BRIEF DESCRIPTION OF THE DRAWINGS

The above and other features of the present invention will be more apparent from the following detailed description in combination with the accompanying drawings, in which:

FIG. 1 shows a flowchart corresponding to the method performed by user equipment according to Embodiment 1 of the present invention.

FIG. 2 is a block diagram of user equipment (UE) according to the present invention.

## DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

In the following description, 5G (or referred to as "New Radio" (NR) or 5G NR) wireless communication system specifications and later evolved versions thereof (e.g., 5G Advanced) formulated by the 3rd Generation Partnership Project (3GPP) are used as exemplary application environments to specifically describe a plurality of embodiments according to the present invention. However, it is to be noted that the present invention is not limited to the following embodiments, but is applicable to many other wireless communication systems, such as wireless communication systems later than 5G, or such as 4G mobile communication systems earlier than 5G, e.g., Long Term Evolution (LTE), LTE-Advanced, LTE-Advanced Pro, etc.

The terms given in the present invention may be named differently in different wireless communication systems, but unified terms are used in the present invention. When applied to a specific system, the terms may be replaced with terms used in the corresponding system.

Unless otherwise specified, in all embodiments and implementations of the present invention:

- "Higher layer(s)" or "upper layer(s)" may refer to one or more protocol layers or protocol sub-layers above a given reference protocol layer or reference protocol sublayer (e.g., a physical layer) in a given protocol stack. For example, for a physical layer, a "higher layer" may refer to a Medium Access Control (MAC) layer, a Radio Link Control (RLC) layer, a Packet Data Convergence Protocol (PDCP) layer, a PC5 Radio Resource Control (RRC) layer, a PC5-S layer, an RRC layer, a Vehicle-to-everything (V2X) layer, an application layer, a V2X application layer, or the like. Unless otherwise specified, the reference protocol layer refers to a physical layer.
- "Configure" may mean that a protocol layer (e.g., RRC layer) entity in a communication node (e.g., UE, or an eNB, or a gNB) provides configuration information to another protocol layer (e.g., physical layer) entity.
- "Configuration" may mean that a communication node provides configuration information to another communication node (for example, a base station transmits RRC signaling to UE, which includes the configuration information, and as another example, UE-A transmits PC5-RRC signaling to UE-B, which includes the configuration information).
- "Configure" may include "pre-configure". "Pre-configure" may mean that corresponding configuration information is pre-configured in a specific storage location in the UE, or corresponding configuration information is pre-configured in a specific accessible storage location in the UE.
- The constant $T_c$ may be defined as: $T_c = 1/(\Delta f_{max} \cdot N_f)$, where $\Delta f_{max} = 480 \cdot 10^3$ Hz, and $N_f = 4096$.
- The constant $\kappa$ may be defined as: $x = T_s/T_c = 64$, where $T_s = 1/(\Delta f_{ref} \cdot N_{f,\ ref})$, $\Delta f_{ref} = 15 \cdot 103$ Hz, and $N_{f,\ ref} = 2048$.
- $\mu$ may represent a subcarrier spacing configuration, for example $\mu = 0$. $\Delta f$ may represent a corresponding subcarrier spacing (SCS), and for example $\mu = 0$ corresponds to $\Delta f = 15\ kHz$.
- "Symbol" may refer to an orthogonal frequency division multiplexing (OFDM) symbol.
- $N_{slot}^{subframe,\mu}$ may represent the number of slots in each subframe.
- $N_{symb}^{slot}$ may represent the number of symbols in each slot.
- One resource may correspond to one or more of the following:

  - One or more parameters in the time domain. For example, a starting symbol of the resource, or a starting slot of the resource, or the number of symbols occupied by the resource, or the number of slots occupied by the resource.
  - One or more parameters in the frequency domain. For example, a starting subchannel of the resource, or a starting resource block (RB) of the resource, or a starting subcarrier of the resource, or the number of subchannels occupied by the resource, or the number of RBs occupied by the resource, or the number of subcarriers occupied by the resource.
  - One or more parameters in the code domain. For example, a cyclic shift value corresponding to the resource or a corresponding cyclic shift index. As another example, a cyclic shift pair value corresponding to the resource or a corresponding cyclic shift pair index.
  - One or more parameters in the spatial domain. For example, a layer corresponding to the resource, where a "layer" may refer to a multiple input multiple output (MIMO) layer.

● An "RB" may refer to a virtual resource block (VRB), or a physical resource block (PRB), or a common resource block (CRB), or an interlaced resource block (IRB).

● "Number" and "index" are interchangeable. For example, the number of an RB may also be referred to as the index of the RB. As another example, "an RB being numbered as 0" may also be expressed as "an RB being indexed as 0".

● The numbering of elements in a sequence (or an array, or a list, or an ordered set, or the like) may start from 0. For example, the first RB of an RB set may be referred to as RB 0 of the RB set.

● An object (e.g., a subcarrier, a slot, a cyclic shift, etc.) may be represented by the index thereof. For example, a CRB numbered as 0 may be referred to as CRB 0.

● If a corresponding number is not specified when a type of object is mentioned, the number of the objects may be one or multiple. For example, in the expression "performing transmission on one channel", the "transmission(s) " may correspond to one transmission, or a plurality of transmissions.

● $\Delta(x_1, x_2)$ may represent an offset between $x_1$ and $x_2$, where $x_1$ and $x_2$ may be two parameters (or variables) that can be compared, or two possible values of one parameter (or variable) (e.g., $x_1$ and $x_2$ may be two slots, or two subframes, or two frames, or two subcarriers, or two RBs, or two sub-channels, or the like).

• $\Delta(x_1, x_2)$ may be equal to $x_2 - x_1$. For example, a CRB set is denoted as

$$A_{CRB}^{ref} = \{a_0^{ref} = 5,\ a_1^{ref} = 15,\ a_2^{ref} = 25,\ a_3^{ref} = 35,\ a_4^{ref} = 45\},\ x_1 = a_0^{ref}$$ , and

$x_2 = a_3^{ref}$ , so that $\Delta(x_1, x_2)$ may be equal to $a_3^{ref} - a_0^{ref} = 35 - 5 = 30$ .

● $\Delta(x_1, x_2)$ may be equal to $idx(x_2) - idx(x_1)$, where $idx(x_1)$ and $idx(x_2)$ are respectively indexes of elements in the same set corresponding to $x_1$ and $x_2$. For example, the CRB set is denoted as

$$A_{CRB}^{ref} = \{a_0^{ref} = 5,\ a_1^{ref} = 15,\ a_2^{ref} = 25,\ a_3^{ref} = 35 \quad a_4^{ref} = 45\},\ x_1 = a_0^{ref}$$ , and

$x_2 = a_3^{ref}$ , so that $\Delta(x_1, x_2)$ may be equal to 3 - 0 = 3.

● An "offset between $x_1$ and $x_2$" may also be referred to as an offset of $x_2$ with respect to $x_1$ or an offset of $x_2$ relative to $x_1$.

● An "offset between $x_1$ and $x_2$" may also be referred to as an offset from $x_1$ to $x_2$.

● Where applicable, if $\Delta(x_1, x_2) = D$, $x_2$ may be denoted as $x_2 = ADD(x_1, D)$.

● Where applicable, if $\Delta(x_1, x_2) = D$, $x_1$ may be denoted as $x_1 = SUBTRACT(x_2, D)$.

● An offset between two subcarriers may refer to an offset between center frequencies of the two subcarriers.

● A modulo operation may be defined as $r \equiv a \bmod N,$ where

■ $r$ is a remainder.

■ $a = N \times q + r$, where $q = \lfloor a/N \rfloor$ . $q$ may be referred to as an integer quotient *of a and N.*

■ $0 \le r < |N|$.

● The unit of microseconds may be denoted as $\mu s$ *or us.*

● A transmission that has not yet begun to be performed (e.g., before an intended start time of the transmission is reached) may be referred to as an "intended transmission".

● A "sensing slot duration" may represent a duration of a corresponding sensing slot, or the sensing slot itself.

● A "sensing slot" may represent the sensing slot itself, or a duration of the sensing slot.

● Where applicable, "power detection" may be referred to as "energy detection", and correspondingly, "detected power" may be referred to as "detected energy". A "power detection threshold" may be referred to as an "energy detection threshold".

● An "SL slot" may refer to a slot in which an SL resource is configured or pre-configured. The "SL resource" may not include a resource used for a synchronization procedure (for example, a resource for transmitting an S-SS/Physical Sidelink Broadcast CHannel or Sidelink-Synchronization Signal/Physical Sidelink Broadcast CHannel (S-SS/PSBCH) block), or may include a resource used for a synchronization procedure.

● An "SL slot" may refer to a slot that belongs to a certain SL resource pool.

● An SL symbol set in an SL slot may be denoted as $L_{SL} = \{l_0^{SL},\ l_1^{SL},\ ...,\ l_{N_{length}^{SL}-1}^{SL}\}$ , where

$l_0^{SL},\ l_1^{SL},\ ......,\ l_{N_{length}^{SL}-1}^{SL}$ respectively represent indexes of corresponding symbols in the slot, where

$$l_0^{SL} = l_{start}^{SL}, \quad l_1^{SL} = l_{start}^{SL} + 1, \quad \cdots\cdots \quad l_{N_{length}^{SL}-1}^{SL} = l_{start}^{SL} + N_{length}^{SL} - 1$$

, where $l_{start}^{SL}$ is the index of the first SL symbol in the slot (for example, configured via the parameter *sl-StartSymbol-r16*), and $N_{length}^{SL}$ is the number of SL symbols in the slot (for example, configured via the parameter *sl-LengthSymbols-r16*).

● An SL transmission of multiplexing a physical sidelink shared channel (PSSCH) and a physical sidelink control channel (PSCCH) associated therewith in the same resource may be referred to as a "PSCCH/PSSCH transmission".

● The "first SL symbol" (or referred to as "first symbol") in resource allocation (or referred to as "sidelink allocation") corresponding to a PSCCH/PSSCH transmission (or a PSCCH transmission therein, or a PSSCH transmission therein) may be a symbol $l_0^{SL}$ or a symbol $l_1^{SL}$ in an SL slot ($T_{SL,\,0}$) corresponding to the resource allocation. For example, when it is explicitly indicated that the resource allocation includes a "duplicated symbol" (i.e., the symbol $l_0^{SL}$) in the corresponding PSCCH and/or PSSCH, the "first SL symbol" may refer to the symbol $l_0^{SL}$. As another example, when it is not explicitly indicated that the resource allocation includes a "duplicated symbol" in the corresponding PSCCH and/or PSSCH, the "first SL symbol" may refer to the symbol $l_1^{SL}$. As another example, when physical resource mapping is performed for the PSCCH transmission and/or the PSSCH transmission (e.g., before a resource element in the symbol $l_1^{SL}$ in the PSCCH/PSSCH transmission, or the corresponding PSCCH transmission, or the corresponding PSSCH transmission is copied to the symbol $l_0^{SL}$), or before physical resource mapping is performed for the corresponding PSCCH transmission and/or PSSCH transmission in the PSCCH/PSSCH transmission, the "first SL symbol" may refer to the symbol $l_1^{SL}$. As another example, when a cyclic prefix extension (CPE) corresponding to the PSCCH/PSSCH transmission, or the corresponding PSCCH transmission, or the corresponding PSSCH transmission is determined, the "first SL symbol" may refer to the symbol $l_0^{SL}$. As another example, when it is determined that a resource is configured or allocated for the PSCCH/PSSCH transmission, or the corresponding PSCCH transmission, or the corresponding PSSCH transmission, the "first SL symbol" may refer to the symbol $l_1^{SL}$.

● The "first SL symbol" (or referred to as "first symbol") in a PSCCH/PSSCH transmission (or a corresponding PSCCH transmission, or a corresponding PSSCH transmission) may be the "first SL symbol" in resource allocation corresponding to the transmission.

● "A subcarrier is in an SL BWP (or an RB set, or a guard band)" may mean one of the following:

■ The center frequency of the subcarrier is in the bandwidth of the SL BWP (or the RB set, or the guard band).
■ The bandwidth of the subcarrier is in the bandwidth of the SL BWP (or the RB set, or the guard band).
■ The subcarrier is a subcarrier in the SL BWP (or the RB set, or the guard band).

● "A subcarrier is not in an SL BWP (or an RB set, or a guard band)" may mean one of the following:

■ The center frequency of the subcarrier is not in the bandwidth of the SL BWP (or the RB set, or the guard band).
■ The bandwidth of the subcarrier is not in the bandwidth of the SL BWP (or the RB set, or the guard band).
■ The subcarrier is not a subcarrier in the SL BWP (or the RB set, or the guard band).

● "An S-SS/PSBCH block is in an SL BWP (or an RB set, or a guard band)" may mean one of the following:

■ The bandwidth of the S-SS/PSBCH block is in the bandwidth of the SL BWP (or the RB set, or the guard band).
■ All subcarriers of the S-SS/PSBCH block are in the SL BWP (or the RB set, or the guard band). For example, "a subcarrier is in an SL BWP (or an RB set, or a guard band)" may be respectively applied to each of the subcarriers.
■ All subcarriers of the S-SS/PSBCH block are subcarriers in the SL BWP (or the RB set, or the guard band).

● "An S-SS/PSBCH block is not in an SL BWP (or an RB set, or a guard band)" may mean one of the following:

■ No part of the bandwidth of the S-SS/PSBCH block is in the bandwidth of the SL BWP (or the RB set, or the guard band).
■ None of subcarriers of the S-SS/PSBCH block is in the SL BWP (or the RB set, or the guard band). For example, for any subcarrier of the S-SS/PSBCH block, the expression "the subcarrier is in the SL BWP (or the RB set, or the guard band)" is false.
■ None of subcarriers of the S-SS/PSBCH block is a subcarrier in the SL BWP (or the RB set, or the guard band).

● In the time domain, a "frame" (or referred to as a "radio frame") may be a system frame or a direct frame. A frame number period (e.g., denoted as $T_{FNP}$) may be a predefined or configured or pre-configured value, e.g., $T_{FNP}$ = 1024 frames. The duration of each frame may be $T_f$ = 10 milliseconds, which may include 10 subframes, where the duration of each subframe is $T_{sf}$ = 1 millisecond. Each subframe may include $N_{\text{slot}}^{\text{subframe},\mu}$ slots, e.g., $N_{\text{slot}}^{\text{subframe},\mu} = 2^{\mu}$.

The index of a slot in a subframe may be denoted as $n_s^{\mu} \; ( n_s^{\mu} \in \{0, \; 1, \; \cdots, \; N_{\text{slot}}^{\text{subframe},\mu} - 1 \})$. The index of a slot in a frame may be denoted as $n_{s,f}^{\mu} \; ( n_{s,f}^{\mu} \in \{0, \; 1, \; \cdots, \; N_{\text{slot}}^{\text{frame},\mu} - 1 \})$ where $N_{\text{slot}}^{\text{frame},\mu}$ may be equal to $10 \cdot 2^{\mu}$. A slot index in a frame number period may be denoted as $n_{s,f,p}^{\mu} \; ( n_{s,f,p}^{\mu} \in \{0, \; 1, \; \cdots, \; N_{\text{slot}}^{FNP,\mu} - 1 \})$, where $N_{\text{slot}}^{FNP,\mu}$ may be equal to $T_{FNP} \cdot N_{\text{slot}}^{\text{frame},\mu}$ (e.g., $1024 \cdot (10 \cdot 2^{\mu})$).

5G (or referred to as new radio (NR)) can operate in both a licensed spectrum (e.g., 2010 MHz to 2025 MHz) and an unlicensed spectrum (e.g., part or all of 5150 MHz to 5925 MHz, part or all of 5925 MHz to 7125 MHz, and part or all of 5925 MHz to 6425 MHz).

When 5G operates in an unlicensed spectrum, a 5G-capable communication node (or referred to as a "node", such as a base station or UE) may perform a "channel access procedure" for a "channel" (or "shared-spectrum channel"). One channel may correspond to one set consisting of several consecutive resource blocks (RBs). An operation performed on one or more shared spectrum channels may be referred to as an "operation with shared spectrum channel access". In contrast, an operation on a licensed spectrum may be referred to as an "operation without shared spectrum channel access".

One channel may correspond to one carrier, or a part of one carrier. For example, one channel may correspond to one carrier of a 20 MHz bandwidth. As another example, one channel may correspond to the lower 20 MHz part in one 40 MHz bandwidth carrier, and another channel may correspond to the higher 20 MHz part in the same carrier.

A channel access procedure may be used to assess whether a channel can be used to perform one or more transmissions (or referred to as "assessing whether one or more transmissions can be performed on a channel"), and the assessment operation may be referred to as clear channel assessment (CCA). Such a mechanism of performing CCA before using a channel may be referred to as Listen Before Talk (LBT).

In a channel access procedure, the state of a channel (e.g., as a result or an output of the channel access procedure) may be determined on the basis of a "sensing" operation performed on the channel. For example, the "clear" channel state may indicate a channel access success, or indicate that a corresponding channel is available, or indicate that one or more transmissions may be performed on the channel. As another example, the "busy" channel state may indicate a channel access failure, or indicate that a corresponding channel is unavailable, or indicate that no transmission can be performed on the channel). Specifically, for example, if a sensing result of the channel in sensing slot durations in a "defer duration" is clear, and sensing results in the immediately following $N$ consecutive additional sensing slot duration(s) are all clear, the sensing result of the channel may be determined to be clear. $N$ may be an integer greater than or equal to zero. A sensing slot duration (e.g., denoted as $T_{sl}$) may be a predefined or configured or pre-configured value, e.g., $T_{sl}$ = 9 us. A defer duration (e.g., denoted as $T_d$) may consist of a period of time having the length $T_f$ and the immediately following $m_{p'}$ consecutive sensing slots, where $T_f$ may be a predefined or configured or pre-configured value (e.g., $T_f$ = 16 us), and $m_{p'}$ may be an integer greater than zero. The period of time having the length $T_f$ may start with a sensing slot.

Within a sensing slot duration, if a duration in which power (e.g., denoted as $X_{detected}$) detected on a channel is less than (or, less than or equal to) a power detection threshold (e.g., denoted as $X_{thresh}$) is at least $T_{sl,\,thresh}$, it can be considered that the channel is clear within the sensing slot duration, or otherwise, it can be considered that the channel is busy within the sensing slot duration. $T_{sl,\,thresh}$ may be a predefined or configured or pre-configured value, e.g., $T_{sl,\,thresh}$ = 4 us.

If a corresponding channel cannot be accessed before a start time of an intended transmission (e.g., before the first symbol corresponding to the transmission) (e.g., the channel cannot be accessed because the state of the channel is "busy"), it can be considered that a "channel access failure" occurs, which may be alternatively referred to as an "LBT failure" where applicable.

A transmission performed on a corresponding channel after a channel access procedure is performed may be referred to as "channel occupancy" (CO), and a corresponding duration may be referred to as a "channel occupancy time" (COT). A COT may be shared between one or more communication nodes, and accordingly, the time corresponding to the COT may include a time for which the one or more communication nodes perform transmissions on respective channels, and a time corresponding to a transmission gap between the transmissions (e.g., when the duration of the transmission gap is less than or equal to 25 *us*).

The channel access procedures may be classified into a plurality of types according to usage, applicable scenarios, etc. For example, if a time span of a sensing slot in which the sensing result is clear before transmission is performed is denoted as $T^{sns}_{last,intvl}$, $T^{sns}_{last,intvl}$ is random in "channel access procedure type 1". In "channel access procedure type 2", $T^{sns}_{last,intvl}$ is deterministic. Channel access procedure type 1 may be used for a non-shared COT or a shared COT. Channel access procedure type 2 may be used to perform channel access in a COT shared by one other communication node.

Channel access procedure type 2 may be divided, according to features of $T^{sns}_{last,intvl}$, into a plurality of sub-types, for example, one or more of the following:

● Channel access procedure type 2A, where $T^{sns}_{last,intvl} \geq 25\ us$, or $T^{sns}_{last,intvl} > 25\ us$, or $T^{sns}_{last,intvl} = 25\ us$. This is applicable to a case in which a gap (e.g., denoted as $T^{tx}_{gap}$) between a corresponding transmission and an immediately preceding transmission satisfies a certain condition, for example $T^{tx}_{gap} \geq 25\ us$, or $T^{tx}_{gap} > 25\ us$, or $T^{tx}_{gap} = 25\ us$.

● Channel access procedure type 2B, where $T^{sns}_{last,intvl} = 16\ us$, or $16\ us \leq T^{sns}_{last,intvl} < 25\ us$, or $16\ us \leq T^{sns}_{last,intvl} \leq 25\ us$, or $16\ us < T^{sns}_{last,intvl} \leq 25\ us$, or $16\ us < T^{sns}_{last,intvl} < 25\ us$. This is applicable to a case in which $T^{tx}_{gap}$ satisfies a certain condition, for example $T^{tx}_{gap} = 16\ us$, or $16\ us \leq T^{tx}_{gap} < 25\ us$, or $16\ us \leq T^{tx}_{gap} \leq 25\ us$, or $16\ us < T^{tx}_{gap} \leq 25\ us$, or $16\ us < T^{tx}_{gap} < 25\ us$.

● Channel access procedure type 2C, where sensing is not performed on a corresponding channel before transmission is performed (e.g., this may correspond to $T^{sns}_{last,intvl} = 0\ us$). This is applicable to a case in which $T^{tx}_{gap}$ satisfies a certain condition, for example $T^{tx}_{gap} < 16\ us$, or $T^{tx}_{gap} \leq 16\ us$.

A "multi-channel access procedure" refers to one or more channel access procedures that may be performed (e.g., performed in parallel) for performing one or more transmissions (e.g., multiple simultaneous transmissions) on a plurality of channels (e.g., a channel set corresponding thereto is denoted as $CH_{acc}$). The "one or more channel access procedures" may be channel access procedures respectively performed on channels in a "target sensing channel set" (e.g., denoted as $CH_{sns} = \{ch_0, ch_1, ..., ch_{Q-1}\}$, where Q may be an integer greater than or equal to 1). The set $CH_{sns}$ may be equal to the set $CH_{acc}$, or otherwise defined (e.g., if no guard band is configured on the carrier on which the channel in the set $CH_{acc}$ is located, the set $CH_{sns}$ may be equal to the set of all channels on the carrier). Specifically, for example, a channel access procedure may be respectively performed on each channel in the set $CH_{sns}$ (e.g., according to channel access procedure type 1), and whether the one or more transmissions can be performed may be determined according to a corresponding result (e.g., for each of the one or more transmissions, the transmission can be performed if access results of all channels corresponding to the transmission are clear). As another example, a channel $ch_j$ may be selected (e.g., uniformly, randomly) from the set $CH_{sns}$ and channel access procedure type 1 may be performed thereon, while channel access procedure type 2 (e.g., channel access procedure type 2A, or channel access procedure type 2B, or channel access procedure type 2C) or another channel access procedure that is not channel access procedure type 1 may be performed on each of the other channels in the set $CH_{sns}$, and whether the one or more transmissions can be performed is determined according to corresponding results.

For an unlicensed spectrum, a set of available resource blocks in a channel may be referred to as an "RB set". In a carrier (e.g., denoted as c), there may be $N_C^{RBset}$ $(N_C^{RBset} \geq 1)$ RB sets respectively denoted as, for example, $rs_0$, $rs_1$, $\cdots\cdots$, $rs_{N_C^{RBset}-1}$. For $i \in \{0, 1, \cdots, N_C^{RBset} - 1\}$, the lowest indexed common resource block (CRB) and the highest indexed CRB of $rs_i$ may be respectively denoted as $N_i^{RS,start}$, $N_i^{RS,end}$. The number of RBs of $rs_i$ may be denoted as $N_i^{RS,size}$, where $N_i^{RS,size}$ may be equal to $N_i^{RS,end} - N_i^{RS,start} + 1$. In addition, optionally, $N_C^{GB} = N_C^{RBset} - 1$ guard bands (or referred to as "intra-cell guard bands") for separating the $N_C^{RBset}$ RB sets may be present in the carrier, and are respectively denoted as, for example, $gb_0$, $gb_1$, $\cdots\cdots$, $gb_{N_C^{GB}-1}$. For $j \in \{0, 1, \cdots, N_C^{GB} - 1\}$, the lowest indexed CRB and the highest indexed CRB of $gb_j$ may be respectively denoted as $N_j^{GB,start}$ and $N_j^{GB,end}$. The number of RBs of $gb_j$ may be denoted as $N_j^{GB,size}$, where $N_j^{GB,size}$ may be equal to $N_j^{GB,end} - N_j^{GB,start} + 1$, and $gb_j$ may be used to separate the RB set $rs_j$ and the RB set $rs_{j+1}$. For example, in a 40 MHz bandwidth carrier, for a 15 kHz SCS, there may be 216 consecutive RBs (e.g., CRB indexes thereof are respectively denoted as 0, 1, ..., 215), and the 216 RBs may be divided into three subsets, respectively corresponding to one RB set $rs_0$ ( $N_0^{RS,start} = 0$, $N_0^{RS,end} = 104$, $N_0^{RS,size} = 105$ ), one guard band $gb_0$ ( $N_0^{GB,start} = 105$, $N_0^{GB,end} = 110$, $N_0^{GB,size} = 6$ ), and one RB set $rs_1$ ( $N_1^{RS,start} = 111$, $N_1^{RS,end} = 215$, $N_1^{RS,size} = 105$ ).

A set consisting of the $N_C^{RBset}$ RB sets may be denoted as $RS_C = \{rs_0, rs_1, \cdots, rs_{N_C^{RBset}-1}\}$. For $i \in \{0, 1, \cdots, N_C^{RBset} - 2\}$ there may be zero or one guard band between two adjacent RB sets ($rs_i$ and $rs_{i+1}$). The set consisting of the $N_C^{GB}$ guard bands may be denoted as $GB_C = \{gb_0, gb_1, \cdots, gb_{N_C^{GB}-1}\}$. For $j \in \{0, 1, \cdots, N_C^{GB} - 1\}$, if $gb_j$ is an empty set, it may be considered that no corresponding guard band is present. For $j = 0, 1, \cdots, N_C^{GB} - 1$, if each $gb_j$ is an empty set, it may be considered that there is no guard band between the RB sets of the carrier c. $N_C^{BWP}$ $(N_C^{BWP} \geq 1)$ bandwidth parts (BWPs) may be configured in the carrier c, and are respectively denoted as, for example, $bwp_0$, $bwp_1$, $\cdots\cdots$, $bwp_{N_C^{BWP}-1}$. For $k \in \{0, 1, \cdots, N_C^{BWP} - 1\}$, $bWP_k$ may correspond to $N_{BWP,k}^{RBset}$ $(N_{BWP,k}^{RBset} \leq N_C^{RBset})$ RB sets respectively denoted as, for example, $rs_{a_{k,0}}$, $rs_{a_{k,1}}$, $\cdots\cdots$, $rs_{a_{k,N_{BWP,k}^{RBset}-1}}$. For $l \in \{0, 1, \cdots, N_{BWP,k}^{RBset} - 1\}$, $rs_{a_{k,l}}$ is an element in the set $RS_C$, and $a_{k,0} < a_{k,1} < \cdots < a_{k,N_{BWP,k}^{RBset}-1}$. The lowest indexed CRB (e.g., denoted as $N_{BWP,k}^{start}$ ) of $bwp_k$ may be equal to $N_{a_{k,0}}^{RS,start}$, and the number of RBs of $bwp_k$ (e.g., denoted as $N_{BWP,k}^{size}$ ) may be equal to $N_{a_{k,N_{BWP,k}^{RBset}-1}}^{RS,end} - N_{a_{k,0}}^{RS,start} + 1$. The $N_{BWP,k}^{RBset}$ RB sets may be $N_{BWP,k}^{RBset}$ consecutive RB sets. For example, for

$l \in \{1, ..., N_{BWP,k}^{RBset} - 1\}$, $a_{k,l} = a_{k,0} + l$. For convenience, when no ambiguity is caused (e.g., in an operation involving only one BWP), $N_{BWP,k}^{RBset}$ may be denoted as $N_{BWP}^{RBset}$, and $rs_{a_{k,0}}$, $rs_{a_{k,1}}$, ......, $rs_{a_{k,N_{BWP,k}^{RBset}-1}}$, may be respectively denoted as $rs_{a_0}$, $rs_{a_1}$, ....., $rs_{a_{N_{BWP}^{RBset}-1}}$. A set consisting of the $N_{BWP}^{RBset}$ RB sets may be denoted as $RS_{BWP} = \{rs_{a_0}, rs_{a_1}, ..., rs_{a_{N_{BWP}^{RBset}-1}}\}$. The set $RS_{BWP}$ may be equal to the set $RS_C$ or equal to a subset of the set $RS_C$.

For the unlicensed spectrum, in order to ensure fair channel sharing between different communication nodes, a certain restriction may be imposed on the power spectral density (PSD) and/or occupied channel bandwidth (OCB) of signal transmission. For example, the maximum PSD cannot exceed 10 dBm/MHz. As another example, when a channel is used, the bandwidth containing 99% of the transmission power must be greater than or equal to a certain percentage (e.g., 80%) of the nominal channel bandwidth. The restriction (if any) may be made and enforced by regulatory authorities. The restrictions (if any) on the PSD and/or the OCB may be different in different countries or regions.

To meet the restriction on the OCB, one radio transmission may correspond to one or more "interlaces". For example, $M_{INT}(M_{INT} \geq 1)$ interlaces may be defined, and the corresponding interlace set is $I_{ALL} = \{int_0, int_1, ..., int_{M_{INT}-1}\}$. For $m \in \{0, 1, ..., M_{INT} - 1\}$, the interlace $int_m$ may correspond to the CRB set $\{m, M_{INT} + m, 2M_{INT} + m, 3M_{INT} + m, ...\}$. $M_{INT}$ may be a predefined or configured or pre-configured value.

The value of $M_{INT}$ may be related to a subcarrier spacing configuration $\mu$ (e.g., for $\mu = 0$, $M_{INT} = 10$, and for $\mu = 1$, $M_{INT} = 5$).

For the same subcarrier spacing configuration $\mu$, different "interlaces" may be defined for different purposes (e.g., different types of SL transmissions). For example, for the same subcarrier spacing configuration $\mu$, one value of $M_{INT}$ is defined for S-SS/PSBCH transmission, and another value of $M_{INT}$ is defined for PSCCH/PSSCH transmission and/or PSFCH transmission. For example, for the same subcarrier spacing configuration $\mu$, one value of $M_{INT}$ is defined for S-SS/PSBCH transmission, and no interlace is defined for PSCCH/PSSCH transmission and/or PSFCH transmission.

A set consisting of one or more RBs occupied by one radio transmission may be related to one or more interlaces and one or more RB sets.

An RB in an interlace may be referred to as an IRB. For example, in $bwp_k$, the indexes of IRBs in the interlace $int_m$ may be respectively denoted as $N_{m,0}^{IRB} = 0$, $N_{m,1}^{IRB} = 1$, ......; in ascending order of frequencies. The corresponding CRB indexes may be respectively denoted as $N_{m,0}^{CRB}$, $N_{m,1}^{CRB}$, ...... . The corresponding PRB indexes may be respectively denoted as $N_{m,0}^{PRB}$, $N_{m,1}^{PRB}$.

The relationship between the IRB index $N_{m,z}^{IRB}$ ($z = 0, 1, ...$) and the corresponding CRB index $N_{m,z}^{CRB}$ may be denoted as $N_{m,z}^{CRB} = f_{IRB}^{CRB}(m, N_{m,z}^{IRB})$, where $f_{IRB}^{CRB}(m, N_{m,z}^{IRB})$ may be defined as:

$$f_{IRB}^{CRB}(m, N_{m,z}^{IRB}) = M_{INT} \cdot N_{m,z}^{IRB} + N_{BWP,k}^{start} + \left((m - N_{BWP,k}^{start}) \bmod M_{INT}\right)$$

The relationship between the IRB index $N_{m,z}^{IRB}$ ($z = 0, 1, ...$) and the corresponding PRB index $N_{m,z}^{PRB}$ may be denoted as $N_{m,z}^{PRB} = f_{IRB}^{PRB}(m, N_{m,z}^{IRB})$ where $f_{IRB}^{PRB}(m, N_{m,z}^{IRB})$ may be defined as:

$$f_{IRB}^{PRB}(m, N_{m,z}^{IRB}) = M_{INT} \cdot N_{m,z}^{IRB} + \left((m - N_{BWP,k}^{start}) \bmod M_{INT}\right)$$

$I_{MAP} = \{int_{m_0}, int_{m_1}, ..., int_{m_{N_{MAP}^{INT}-1}}\}$ is denoted as a subset of the set $I_{ALL}$, where $N_{MAP}^{INT} \in \{1, 2, ..., M_{INT}\}$; $int_{m_0}$, $int_{m_1}$, ......, $int_{m_{N_{MAP}^{INT}-1}}$ may be consecutive interlaces (e.g., for $l \in \{1, ..., N_{MAP}^{INT} - 1\}$, $m_l = m_0 + l$) or non-consecutive interlaces. $RS_{MAP} = \{rs_{i_0}, rs_{i_1}, ..., rs_{i_{N_{MAP}^{RBset}-1}}\}$ is denoted a subset of the *set RS$_{BWP}$*, where $N_{MAP}^{RBset} \in \{1, 2, \cdots, N_{BWP,k}^{RBset}\}$ ; $rs_{i_0}, rs_{i_1}, \ldots, rs_{i_{N_{MAP}^{RBset}-1}}$ may be consecutive RB sets (e.g., for $l \in \{1, \ldots, N_{MAP}^{RBset} - 1\}$, $i_l = i_0 + l$) or non-consecutive RB sets.

$f_{MAP}^{RB}(I_{MAP}, RS_{MAP})$ may represent a mapping of the set $I_{MAP}$ and the set $RS_{MAP}$ to a set including one or more RBs.

$f_{MAP}^{RB}(I_{MAP}, RS_{MAP})$ may be defined as one of the following:

- $RB_{MAP}^{RS}$.

- $RB_{MAP}^{RS} \cap RB_{MAP}^{INT}$ (i.e., the intersection of $RB_{MAP}^{RS}$ and $RB_{MAP}^{INT}$).

- $RB_{MAP}^{RS,GB}$.

- $RB_{MAP}^{RS,GB} \cap RB_{MAP}^{INT}$ (i.e., the intersection of $RB_{MAP}^{RS,GB}$ and $RB_{MAP}^{INT}$).

$RB_{MAP}^{RS}$ is all RBs in the union of all RB sets in the set $RS_{MAP}$ (or referred to as "a set consisting of all RBs in the union of all RB sets in the set $RS_{MAP}$"). $RB_{MAP}^{INT}$ is all RBs corresponding to all interlaces in the set $I_{MAP}$ (or referred to as "a set consisting of all RBs corresponding to all interlaces in the set $I_{MAP}$"). $RB_{MAP}^{RS,GB}$ is the union of $RB_{MAP}^{RS}$ and $RB_{MAP}^{GB}$, where $RB_{MAP}^{GB}$ is all RBs in the union of all guard bands (if any) between all RB sets in the set $RS_{MAP}$ (or referred to as "a set consisting of all RBs in the union of all guard bands (if any) between all RB sets in the set $RS_{MAP}$").

For example, if $M_{INT} = 5$, $I_{MAP} = \{int_0, int_1\}$, where the CRBs corresponding to $int_0$ are $\{10, 15, 20, ...\}$, and the CRBs corresponding to $int_1$ are $\{11, 16, 21, ...\}$, and $RS_{MAP} = \{rs_0, rs_1\}$, where the CRBs corresponding to $rs_0$ are $\{10, 11, 12, ..., 59\}$, and the CRBs corresponding to $rs_1$ are $\{66, 67, 68, ..., 115\}$, then

- $RB_{MAP}^{RS} = \{10, 11, 12, \ldots, 59\} \cup \{66, 67, 68, \ldots, 115\} = \{10, 11, 12, \ldots, 59, 66, 67, 68, \ldots, 115\}$.

- $RB_{MAP}^{INT} = \{10, 15, 20, \ldots\} \cup \{11, 16, 21, \ldots\} = \{10, 11, 15, 16, 20, 21, \ldots\}$.

- $RB_{MAP}^{GB} = \{60, 61, 62, 63, 64, 65\}$.

- $RB_{MAP}^{RS,GB} = \{10, 11, 12, \ldots, 59, 66, 67, 68, \ldots, 115\} \cup \{60, 61, 62, 63, 64, 65\} = \{10, 11, 12, ..., 115\}$.

Correspondingly, $f_{MAP}^{RB}(I_{MAP}, RS_{MAP})$ may be equal to one of the following:

- $RB_{MAP}^{RS}$, i.e., $\{10, 11, 12, ..., 59, 66, 67, 68, ..., 115\}$.

- $RB_{MAP}^{RS} \cap RB_{MAP}^{INT}$, i.e., $\{10, 11, 15, 16, 20, 21, ..., 55, 56, 66, 70, 71, 75, 76, 80, 81, ..., 110, 111, 115\}$.

- $RB_{MAP}^{RS,GB}$, i.e., $\{10, 11, 12, ..., 115\}$.

- $RB_{MAP}^{RS,GB} \cap RB_{MAP}^{INT}$, i.e., $\{10, 11, 15, 16, 20, 21, ..., 110, 111, 115\}$.

For different uses (e.g., resource mappings for different channels or signals), the definition of

$f_{MAP}^{RB}(I_{MAP},\ RS_{MAP})$ may be different.

For the unlicensed spectrum, after successful channel access, in order to avoid that other communication nodes also (at the same time, or at a later time) detect that the channel is available and occupy the channel (resulting in a conflict), the corresponding transmission should be started as soon as possible. In another aspect, in a communication system (e.g., a communication system using NR technology), the start time of a transmission may not be arbitrary, but is limited to some discrete time points. For example, the start time can only be located at the start time of one slot, or at the start time of a particular symbol (e.g., the first SL symbol) in one slot, which greatly limits the flexibility of performing transmission in the unlicensed spectrum. This problem can be alleviated to some extent by introducing a cyclic prefix extension (CPE) function. For example, if it is assumed that $t = 0$ corresponds to the start time of a subframe, and the start time of the symbol indexed as $l \in \{0, 1, \cdots, N_{slot}^{subframe,\mu} N_{symb}^{slot} - 1\}$ in the subframe is $t_{start,l}^{\mu}$, the symbol length (or referred to as the "symbol duration") is $T_{symb,l}^{\mu}$, so that in the case that the CPE is used, transmission (e.g., denoted as $TS_{l_0}$) corresponding to a starting symbol $l_0$ may start at $t = t_{start,l_0}^{\mu} - T_{ext,l_0}$ (rather than $t = t_{start,l_0}^{\mu}$ in the case that the CPE is not used). A time-continuous signal at $t_{start,l_0}^{\mu} - T_{ext,l_0} \le t < t_{start,l_0}^{\mu}$ may be defined as $s_{ext,l_0}^{(p,\mu)}(t) = \bar{s}_{l_0}^{(p,\mu)}(t)$.
Wherein

- $t_{start,l}^{\mu}$ may be in unit of second.

- $T_{symb,l}^{\mu}$ may be in unit of second.

- $T_{symb,l}^{\mu}$ includes the length (e.g., denoted as $N_{CP,l}^{\mu} T_c$) of the CP in the corresponding symbol and the length (e.g., denoted as $N_u^{\mu} T_c$) of the core OFDM symbol.

- $\bar{s}_{l_0}^{(p,\mu)}(t)$ represents the time-continuous signal of the symbol $l_0$ at

$$t_{start,l_0}^{\mu} \le t < t_{start,l_0}^{\mu} + T_{symb,l_0}^{\mu}.$$

- $p$ represents a corresponding antenna port.
- $\mu$ is a corresponding subcarrier spacing configuration.
- $T_{ext,l_0}$ may be referred to as a CPE length (or a CPE duration).
- $T_{ext,l0}$ may be in unit of second.

For the transmission $TS_{l_0}$, the CPE length $T_{ext,l_0}$ may be defined in one of the following manners:

- $T_{ext,l_0} = \min\left(\max\left(T_{ext0,l_0},\ 0\right),\ T_{bnd,l_0}^{CPE}\right)$.

- $T_{ext,l_0} = T_{ext0,l_0}$.

- 

$$T_{ext,l_0} = T_{bnd,l_0}^{CPE}.$$

Wherein

- $T_{ext,l0}$ may be defined differently for transmissions scheduled (or triggered) in different manners. For example, for a transmission scheduled by a dynamic grant, $T_{ext,l_0} = \min\left(\max\left(T_{ext0,l_0},\ 0\right),\ T_{bnd,l_0}^{CPE}\right)$. As another example, for a transmission scheduled by a configured grant, $T_{ext,l0} = T_{ext0,l0}$.

- $T_{bnd,l_0}^{CPE}$, may be equal to the sum of the lengths of the $N_{bnd,l_0}^{CPE}$ ($N_{bnd,l_0}^{CPE}$) symbol(s) immediately preceding the symbol $l_0$. For example, $T_{bnd,l_0}^{CPE}$ may be defined as $T_{bnd,l_0}^{CPE} = \sum_{k=1}^{N_{bnd,l_0}^{CPE}} T_{symb,(l_0-k) \bmod 7\cdot2^\mu}^{\mu}$ (or $T_{bnd,l_0}^{CPE} = \sum_{k=1}^{N_{bnd,l_0}^{CPE}} T_{symb,(l_0-k) \bmod (7\cdot2^\mu)}^{\mu}$). Specifically, for example, $N_{bnd,l_0}^{CPE} = 1$. Accordingly, the "$N_{bnd,l_0}^{CPE}$ symbols" correspond to the symbol immediately preceding the symbol $l_0$, and is, for example, denoted as $l_{0, m1}$. As another example, $N_{bnd,l_0}^{CPE} = 2$. Accordingly, the "$N_{bnd,l_0}^{CPE}$ symbols" correspond to the symbol (e.g., denoted as the symbol $l_{0, m1}$) immediately preceding the symbol $l_0$ and the symbol (e.g., denoted as the symbol $l_{0, m2}$) immediately preceding the symbol $l_{0, m1}$. Wherein

- ■ $N_{bnd,l_0}^{CPE}$ may be a predefined or configured or pre-configured value. For example, $N_{bnd,l_0}^{CPE} = 1$.

- ■ $N_{bnd,l_0}^{CPE}$ may be a value indicated via downlink control information (DCI) or sidelink control information (SCI). The indicated value may be an element in a predefined or configured or pre-configured set.

- ■ $N_{bnd,l_0}^{CPE}$ may be related to $\mu$. For example, $N_{bnd,l_0}^{CPE} = 2^\mu$. As another example, for $\mu \in \{0, 1\}$, $N_{bnd,l_0}^{CPE} = 1$. As another example, for $\mu = 2$, $N_{bnd,l_0}^{CPE} = 2$.

- $T_{bnd,l_0}^{CPE}$ may be equal to $T_{symb,l_{bnd}^{CPE}}^{\mu_{bnd}^{CPE}}$. $l_{bnd}^{CPE}$ may be equal to $(l_0 - 1) \bmod 7 \cdot 2^{\mu_{bnd}^{CPE}}$ (or $(l_0 - 1) \bmod \left(7 \cdot 2^{\mu_{bnd}^{CPE}}\right)$), or may be a predefined or configured or pre-configured symbol index in a subframe. $\mu_{bnd}^{CPE}$ may be equal to $\mu$, or may be a predefined or configured or pre-configured subcarrier spacing configuration. For example, $\mu_{bnd}^{CPE} = 0$, $l_{bnd}^{CPE} = 0$. As another example, $\mu_{bnd}^{CPE} = \mu$, and $l_{bnd}^{CPE} = 0$.

- $T_{ext0,l0}$ may be equal to the sum of the lengths of the $N_{ext0,l_0}^{CPE}$ symbols preceding the symbol $l_0$ minus an offset value (e.g., denoted as $\Delta_{ACCTA}^{CPE}$) related to channel access and/or timing advance, or may be equal to $T_{bnd,l_0}^{CPE}$ minus $\Delta_{ACCTA}^{CPE}$, or may be equal to $T_{symb,l_{bnd}^{CPE}}^{\mu_{bnd}^{CPE}}$ minus $\Delta_{ACCTA}^{CPE}$. For example, $T_{ext0,l_0}$ may be defined as $T_{ext0,l_0} = \sum_{k=1}^{N_{ext0,l_0}^{CPE}} T_{symb,(l_0-k) \bmod 7\cdot2^\mu}^{\mu} - \Delta_{ACCTA}^{CPE}$ (or, $T_{ext0,l_0} = \sum_{k=1}^{N_{ext0,l_0}^{CPE}} T_{symb,(l_0-k) \bmod (7\cdot2^\mu)}^{\mu} - \Delta_{ACCTA}^{CPE}$), or may be defined as $T_{ext0,l_0} = T_{bnd,l_0}^{CPE} - \Delta_{ACCTA}^{CPE}$, or may be defined as $T_{ext0,l_0} = T_{symb,l_{bnd}^{CPE}}^{\mu_{bnd}^{CPE}} - \Delta_{ACCTA}^{CPE}$. Wherein

- ■ $N_{ext0,l_0}^{CPE}$ may be a predefined or configured or pre-configured value. For example, $N_{ext0,l_0}^{CPE} = 1$.

- ■ $N_{ext0,l_0}^{CPE}$ may be a value indicated via DCI or SCI. The indicated value may be an element in a predefined or configured or pre-configured set.

■ $N_{\text{ext0},l_0}^{CPE}$ may be related to $\mu$. For example, $N_{\text{ext0},l_0}^{CPE} = 2^\mu$. As another example, for $\mu \in \{0, 1\}$, $N_{\text{ext0},l_0}^{CPE} = 1$. As another example, for $\mu = 2$, $N_{\text{ext0},l_0}^{CPE} = 2$.

■ $N_{\text{ext0},l_0}^{CPE}$ may be the greatest integer satisfying $T_{\text{ext0},l_0} < T_{\text{symb},(l_0-1)\ \mathrm{mod}\ 7\cdot 2^\mu}^{\mu}$ (or, $T_{\text{ext0},l_0} < T_{\text{symb},(l_0-1)\ \mathrm{mod}\ (7\cdot 2^\mu)}^{\mu}$).

■ $N_{\text{ext0},l_0}^{CPE}$ may be the greatest integer satisfying $T_{\text{ext0},l_0} \leq T_{\text{symb},(l_0-1)\ \mathrm{mod}\ 7\cdot 2^\mu}^{\mu}$ (or, $T_{\text{ext0},l_0} \leq T_{\text{symb},(l_0-1)\ \mathrm{mod}\ (7\cdot 2^\mu)}^{\mu}$).

■ $N_{\text{ext0},l_0}^{CPE}$ may be the greatest integer satisfying $T_{\text{ext0},l_0} < T_{bnd,l_0}^{CPE}$.

■ $N_{\text{ext0},l_0}^{CPE}$ may be the greatest integer satisfying $T_{\text{ext0},l_0} \leq T_{bnd,l_0}^{CPE}$.

■ $\Delta_{ACCTA}^{CPE}$ may be in unit of second.

■ $\Delta_{ACCTA}^{CPE}$ may be related to $N_{\text{ext0},l_0}^{CPE}$. For example, each value of $N_{\text{ext0},l_0}^{CPE}$ corresponds to a unique value of $\Delta_{ACCTA}^{CPE}$.

■ $\Delta_{ACCTA}^{CPE}$ may be a predefined or configured or pre-configured value. For example, $\Delta_{ACCTA}^{CPE} = 16 \cdot 10^{-6}$. As another example, $\Delta_{ACCTA}^{CPE} = 25 \cdot 10^{-6}$. As another example, $\Delta_{ACCTA}^{CPE} = 34 \cdot 10^{-6}$. As another example, $\Delta_{ACCTA}^{CPE} = 43 \cdot 10^{-6}$. As another example, $\Delta_{ACCTA}^{CPE} = 52 \cdot 10^{-6}$. As another example, $\Delta_{ACCTA}^{CPE} = 61 \cdot 10^{-6}$.

■ $\Delta_{ACCTA}^{CPE}$ may be a value indicated via DCI or SCI. The indicated value may be an element in a predefined or configured or pre-configured set.

■ A pair formed by a given value of $N_{\text{ext0},l_0}^{CPE}$ (e.g., $N_{\text{ext0},l_0}^{CPE} = 1$) and a given value of $\Delta_{ACCTA}^{CPE}$ (e.g., $\Delta_{ACCTA}^{CPE} = 25 \cdot 10^{-6}$) may be indicated via a configured value or a value indicated in DCI or a value indicated in SCI, and the pair may be an element in a predefined or configured or pre-configured set.

■ $\Delta_{ACCTA}^{CPE}$ may be related to $\mu$.

■ $\Delta_{ACCTA}^{CPE}$ may be configured or indicated to be equal to $\sum_{k=1}^{N_{\text{ext0},l_0}^{CPE}} T_{\text{symb},(l_0-k)\ \mathrm{mod}\ 7\cdot 2^\mu}^{\mu}$ (or, $\sum_{k=1}^{N_{\text{ext0},l_0}^{CPE}} T_{\text{symb},(l_0-k)\ \mathrm{mod}\ (7\cdot 2^\mu)}^{\mu}$), and correspondingly, $T_{\text{ext0},}$

$l_o = 0$.

● Part or all of $T_{\text{ext0},lo}$ may be defined differently for transmissions scheduled (or triggered) in different manners. For example, for a transmission scheduled by a dynamic grant, $N_{\text{ext0},l_0}^{CPE}$ is a predefined value independent of $\mu$, or is a configured or pre-configured value. As another example, for a transmission scheduled by a configured grant, $N_{\text{ext0},l_0}^{CPE} = 2^{\mu}$.

A set of all possible values of $T_{\text{ext},lo}$ of the transmission $TS_{lo}$, (or referred to as "all allowed values of $T_{\text{ext},lo}$ of the transmission $TS_{lo}$") may be denoted as $E_{\text{ext},l_0}^{CPE}$. The largest element in the set $E_{\text{ext},l_0}^{CPE}$ may be denoted as $T_{\text{ext,max},lo}$.

For the transmission $TS_{lo}$, $T_{\text{ext},lo}$ may correspond to an upper boundary (e.g., referred to as the "CPE upper boundary" of the transmission $TS_{lo}$, and denoted as, for example, $T_{\text{ext,bnd},lo}$). For example, $T_{\text{ext,bnd},lo}$ may be equal to $T_{\text{ext,max},lo}$. As another example, $T_{\text{ext,bnd},lo}$ may be a value greater than any element in the set $E_{\text{ext},l_0}^{CPE}$.

$T_{\text{ext,bnd},lo}$ may be related to $l_0$, or may be independent of $l_0$.

$T_{\text{ext,bnd},lo}$ may be related to $\mu$, or may be independent of $\mu$.

$T_{\text{ext,bnd},lo}$ may be equal to one of the following:

● $T_{\text{ext,max},lo}$.

● The greatest value in $T_{\text{ext,max},0}, T_{\text{ext,max},1}, \ldots\ldots, T_{\text{ext,max},N_{\text{slot}}^{\text{subframe},\mu}N_{\text{symb}}^{\text{slot}}-1}$.

● The greatest value in $T_{\text{ext,max},0}, T_{\text{ext,max},1}, \ldots\ldots, T_{\text{ext,max},7\cdot2^{\mu}-1}$. CPE

● $T_{bnd,l_0}^{CPE}$.

● The greatest value in $T_{bnd,0}^{CPE}, T_{bnd,1}^{CPE}, \ldots\ldots, T_{bnd,N_{\text{slot}}^{\text{subframe},\mu}N_{\text{symb}}^{\text{slot}}-1}^{CPE}$.

● The greatest value in $T_{bnd,0}^{CPE}, T_{bnd,1}^{CPE}, \ldots\ldots, T_{bnd,7\cdot2^{\mu}-1}^{CPE}$.

● $T_{\text{symb},(l_0-1)\ \text{mod}\ 7\cdot2^{\mu}}^{\mu}$ (or, $T_{\text{symb},(l_0-1)\ \text{mod}\ (7\cdot2^{\mu})}^{\mu}$).

● The greatest value in $T_{\text{symb},0}^{\mu}, T_{\text{symb},1}^{\mu}, \ldots\ldots, T_{\text{symb},N_{\text{slot}}^{\text{subframe},\mu}N_{\text{symb}}^{\text{slot}}-1}^{\mu}$.

● The greatest value in $T_{\text{symb},0}^{\mu}, T_{\text{symb},1}^{\mu}, \ldots\ldots, T_{\text{symb},7\cdot2^{\mu}-1}^{\mu}$.

● $T_{\text{symb},l_{bnd}^{CPE}}^{\mu_{bnd}^{CPE}}$.

● $\sum_{k=1}^{2^{\mu}} T_{\text{symb},(l_0-k)\ \text{mod}\ 7\cdot2^{\mu}}^{\mu}$ (or, $\sum_{k=1}^{2^{\mu}} T_{\text{symb},(l_0-k)\ \text{mod}\ (7\cdot2^{\mu})}^{\mu}$).

● $\sum_{k=1}^{N_{\text{ext0},l_0}^{CPE}} T_{\text{symb},(l_0-k)\ \text{mod}\ 7\cdot2^{\mu}}^{\mu}$ (or, $\sum_{k=1}^{N_{\text{ext0},l_0}^{CPE}} T_{\text{symb},(l_0-k)\ \text{mod}\ (7\cdot2^{\mu})}^{\mu}$).

$T_{\text{ext,bnd},lo}$ may be defined differently for transmissions scheduled (or triggered) in different manners. For example, for a transmission scheduled by a dynamic grant, $T_{\text{ext,bnd},l_0} = T_{\text{symb},(l_0-1)\ \text{mod}\ 7\cdot2^{\mu}}^{\mu}$ (or, $T_{\text{ext,bnd},l_0} = T_{\text{symb},(l_0-1)\ \text{mod}\ (7\cdot2^{\mu})}^{\mu}$). As another example, for a transmission scheduled by a configured grant, $T_{\text{ext,bnd},l_0} = \sum_{k=1}^{2^{\mu}} T_{\text{symb},(l_0-k)\ \text{mod}\ 7\cdot2^{\mu}}^{\mu}$ (or, $T_{\text{ext,bnd},l_0} = \sum_{k=1}^{2^{\mu}} T_{\text{symb},(l_0-k)\ \text{mod}\ (7\cdot2^{\mu})}^{\mu}$).

**[Embodiment 1]**

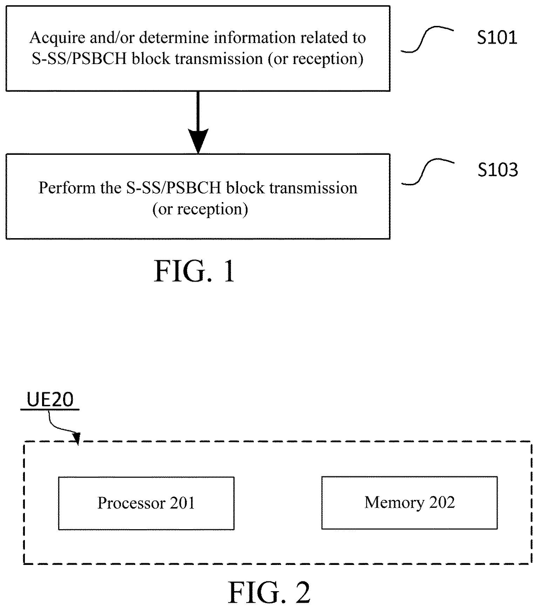

A method performed by a user equipment according to Embodiment 1 of the present invention will be described below with reference to FIG. 1.

FIG. 1 shows a flowchart corresponding to the method performed by user equipment according to Embodiment 1 of the present invention.

As shown in FIG. 1, in Embodiment 1 of the present invention, the steps performed by user equipment (UE) include: step S101 and step S103.

Specifically, in step S101, information related to S-SS/PSBCH block transmission (or reception) is acquired and/or determined. The "S-SS/PSBCH block" may also be referred to as "SL SSB" or "S-SSB".

The "information related to S-SS/PSBCH block transmission (or reception)" may be configured in an SL BWP. The SL BWP may include $N_{RBset}^{BWP}$ RB sets respectively denoted as, for example, $rs_0^{BWP}$, $rs_1^{BWP}$, ......, $rs_{N_{RBset}^{BWP}-1}^{BWP}$, in ascending order of frequencies, where $N_{RBset}^{BWP}$ may be an integer greater than or equal to 1. A set consisting of the $N_{RBset}^{BWP}$ RB sets may be denoted as $RS_{BWP} = \{rs_0^{BWP}, rs_1^{BWP}, \cdots, rs_{N_{RBset}^{BWP}-1}^{BWP}\}$.

For $i \in \{0, 1, ..., N_{RBset}^{BWP} - 1\}$, the lowest indexed common resource block (CRB) and the highest indexed CRB of $rs_i^{BWP}$ may be respectively denoted as $N_i^{BWP,RS,start}$ and $N_i^{BWP,RS,end}$. The number of RBs of $rs_i^{BWP}$ may be denoted as $N_i^{BWP,RS,size}$. $N_i^{BWP,RS,size}$ may be equal to $N_i^{BWP,RS,end} - N_i^{BWP,RS,start} + 1$. In addition, $N_{GB}^{BWP} = N_{RBset}^{BWP} - 1$ guard bands (or referred to as "intra-cell guard bands") for separating the $N_{RBset}^{BWP}$ RB sets may be present in the SL BWP, and are respectively denoted as, for example, $gb_0^{BWP}$, $gb_1^{BWP}$, ......, $gb_{N_{GB}^{BWP}-1}^{BWP}$. For $j \in \{0, 1, \cdots, N_{GB}^{BWP} - 1\}$, $gb_j^{BWP}$ may be used to separate the RB set $rs_j^{BWP}$ and the RB set $rs_{j+1}^{BWP}$. The lowest indexed CRB and the highest indexed CRB of $gb_j^{BWP}$ may be respectively denoted as $N_j^{BWP,GB,start}$ and $N_j^{BWP,GB,end}$. The number of RBs may be denoted as $N_j^{BWP,GB,size}$. $N_j^{BWP,GB,size}$ may be equal to $N_j^{BWP,GB,end} - N_j^{BWP,GB,start} + 1$. The lowest indexed CRB of the SL BWP may be equal to $N_0^{BWP,RS,start}$. The number of RBs of the SL BWP may be defined as $N_{size}^{BWP} = N_{N_{RBset}^{BWP}-1}^{BWP,RS,end} - N_0^{BWP,RS,start} + 1$.

For example, 216 consecutive RBs are configured in the SL BWP (e.g., corresponding CRB indexes are respectively 0, 1, ..., 215), and the 216 RBs may be respectively located in the following three sets:

● RB set $rs_0^{BWP}$, with $N_0^{BWP,RS,start} = 0$, $N_0^{BWP,RS,end} = 104$, and $N_0^{BWP,RS,size} = 105$.

● guard band $gb_0^{BWP}$, with $N_0^{BWP,GB,start} = 105$, $N_0^{BWP,GB,end} = 110$, and $N_0^{BWP,GB,size} = 6$.

● RB set $rs_1^{BWP}$, with $N_1^{BWP,RS,start} = 111$, $N_1^{BWP,RS,end} = 215$, and $N_1^{BWP,RS,size} = 105$.

In the frequency domain, transmission (or reception) of one S-SS/PSBCH block may correspond to $N_{SC,ALL}^{SSSB}$ subcarriers. $N_{SC,ALL}^{SSSB}$ may be a predefined or configured or pre-configured value, or may be determined by one or more predefined or configured or pre-configured values, or may be determined in another manner. For example, $N_{SC,ALL}^{SSSB} = 132$. As another example, $N_{SC,ALL}^{SSSB}$ is an integer multiple of 132. As another example, $N_{SC,ALL}^{SSSB} = 240$. As another example, $N_{SC,ALL}^{SSSB}$ is an integer multiple of 240. The $N_{SC,ALL}^{SSSB}$ subcarriers may be respectively indexed as 0, 1, $\cdots\cdots$, $N_{SC,ALL}^{SSSB} - 1$ in a certain order (e.g., in ascending order of center frequencies of the subcarriers).

The $N_{SC,ALL}^{SSSB}$ subcarriers may be $N_{SC,ALL}^{SSSB}$ consecutive subcarriers. For example, the $N_{SC,ALL}^{SSSB}$ subcarriers may correspond to $N_{SC,ALL}^{SSSB}$ consecutive subcarriers, starting from the first subcarrier of a certain PRB, in the SL BWP.

The $N_{SC,ALL}^{SSSB}$ subcarriers may be subcarriers in $N_{RB,ALL}^{SSSB} = N_{SC,ALL}^{SSSB}/12$ RBs, where $N_{SC,ALL}^{SSSB}$ may be an integer multiple of 12.

The $N_{RB,ALL}^{SSSB}$ RBs may be in the same RB set (e.g., denoted as $rs_x^{BWP}$, wherein x ∈ {0, 1, $\cdots$, $N_{RBset}^{BWP} - 1$}). For example, indexes of the $N_{RB,ALL}^{SSSB}$ RBs in the RB set $rs_x^{BWP}$ may be respectively

$$X_0 - \lfloor N_{RB,ALL}^{SSSB}/2 \rfloor \cdot \Delta_{RB}^{SSSB}, \quad X_0 - \left( \left\lceil \frac{N_{RB,ALL}^{SSSB}}{2} \right\rceil - 1 \right) \cdot \Delta_{RB}^{SSSB}, \quad \cdots\cdots, \quad X_0 - 1 \cdot \Delta_{RB}^{SSSB},$$

$$X_0, \quad X_0 + 1 \cdot \Delta_{RB}^{SSSB}, \quad \cdots\cdots, \quad X_0 + \left( \left\lceil \frac{N_{RB,ALL}^{SSSB}}{2} \right\rceil - 1 \right) \cdot \Delta_{RB}^{SSSB}, \text{ and } X_0 + \lfloor N_{RB,ALL}^{SSSB}/2 \rfloor \cdot \Delta_{RB}^{SSSB}.$$ $X_0$ may be equal to $\lfloor N_x^{BWP,RS,size}/2 \rfloor$. $\Delta_{RB}^{SSSB}$ may be a predefined or configured or pre-configured value, or $\Delta_{RB}^{SSSB}$ may be related to $N_x^{BWP,RS,size}$ and/or $N_{RB,ALL}^{SSSB}$ (or $N_{SC,ALL}^{SSSB}$). For example, $N_{RB,ALL}^{SSSB} = 11$, $N_x^{BWP,RS,size} = 106$, $X_0 = 53$, and $\Delta_{RB}^{SSSB} = 10$. Accordingly, the indexes of the $N_{RB,ALL}^{SSSB}$ RBs in the RB set $rs_x^{BWP}$ may be respectively 53 - 5 · 10 = 3, 53 - 4 · 10 = 13, 53 - 3 · 10 = 23, 53 - 2 · 10 = 33, 53 - 1 · 10 = 43, 53, 53 + 1 · 10 = 63, 53 + 2 · 10 = 73, 53 + 3 · 10 = 83, 53 + 4 · 10 = 93, and 53 + 5 · 10 = 103.

The $N_{SC,ALL}^{SSSB}$ subcarriers may be non-consecutive (or partially consecutive) subcarriers. For example, the $N_{SC,ALL}^{SSSB}$ subcarriers may be subcarriers in a plurality of RBs in one or more interlaces.

The $N_{SC,ALL}^{SSSB}$ subcarriers may be divided into $N_{SC,GRP}^{SSSB}$ subcarrier groups. The $N_{SC,GRP}^{SSSB}$ subcarrier groups may be respectively indexed as 0, 1, $\cdots\cdots$, $N_{SC,GRP}^{SSSB} - 1$ in a certain order (e.g., in ascending order of indexes of interlaces in which the subcarriers in each subcarrier group are located, or in ascending order of the center frequencies of the subcarriers having the lowest center frequencies in respective subcarrier groups). $N_{SC,GRP}^{SSSB}$ may be a predefined or configured or pre-configured value, for example $N_{SC,GRP}^{SSSB} = 1$ or $N_{SC,GRP}^{SSSB} = 2$. $N_{SC,GRP}^{SSSB} = 1$ may correspond to a situation in which the $N_{SC,ALL}^{SSSB}$ subcarriers are not grouped.

For $g \in \{0, 1, ..., N_{SC,GRP}^{SSSB} - 1\}$, the number of subcarriers included in a subcarrier group g may be denoted as $N_{SC,g}^{SSSB}$. The $N_{SC,g}^{SSSB}$ subcarriers may be respectively indexed in a certain order (e.g., in ascending order of center frequencies of the subcarriers) as 0, 1, ..., $N_{SC,g}^{SSSB} - 1$. $N_{SC,g}^{SSSB}$ may be a value independent of g, for example $N_{SC,g}^{SSSB} = N_{SCPG}^{SSSB}$, wherein $N_{SCPG}^{SSSB}$ is a predefined or configured or pre-configured value, for example,

$N_{SCPG}^{SSSB} = 132$ or $N_{SCPG}^{SSSB} = 240$. Accordingly, the relationship between $N_{SC,ALL}^{SSSB}$, $N_{SC,GRP}^{SSSB}$ and $N_{SCPG}^{SSSB}$ may be $N_{SC,ALL}^{SSSB} = N_{SCPG}^{SSSB} \cdot N_{SC,GRP}^{SSSB}$.

Each of the $N_{SC,GRP}^{SSSB}$ subcarrier groups may consist of subcarriers in a plurality of RBs in the same interlace. Each subcarrier group may correspond to a unique predefined or configured or pre-configured interlace. For example, if $g_1 \in \{0, 1, ..., N_{SC,GRP}^{SSSB} - 1\}$, $g_2 \in \{0, 1, ..., N_{SC,GRP}^{SSSB} - 1\}$ and $g_1 \neq g_2$, the subcarrier group $g_1$ may consist of subcarriers in a plurality of RBs in an interlace, and the subcarrier group $g_2$ may consist of subcarriers in a plurality of RBs in another interlace. The plurality of RBs in each subcarrier group may be determined in a predefined or configured or pre-configured manner (e.g., a plurality of RBs with consecutive IRB numbers in an interlace may be determined according to a predefined or configured or pre-configured starting IRB in the corresponding interlace and a predefined or configured or pre-configured number of IRBs).

CRB (or PRB) ranges corresponding to the subcarriers in any two of the $N_{SC,GRP}^{SSSB}$ subcarrier groups may not overlap with each other. For example, $\mu = 0$, $M_{INT} = 10$, $N_{SC,ALL}^{SSSB} = 132$, and $N_{SC,GRP}^{SSSB} = 2$. The subcarrier group 0 includes 72 subcarriers (i.e., $N_{SC,0}^{SSSB} = 72$). For example, the 72 subcarriers may consist of subcarriers in six CRBs with respective numbers of 0, 10, 20, 30, 40, and 50 in the interlace 0, and the corresponding CRB range may be denoted as [0, 50]. The subcarrier group 1 includes 60 subcarriers (i.e., $N_{SC,1}^{SSSB} = 60$). For example, the 60 subcarriers may consist of subcarriers in five CRBs with respective numbers of 55, 65, 75, 85, and 95 in the interlace 5, and the corresponding CRB range may be denoted as [55, 95].

For $g \in \{0, 1, ..., N_{SC,GRP}^{SSSB} - 1\}$, $N_{SC,g}^{SSSB}$ subcarriers in the subcarrier group $g$ may be consecutive subcarriers. For example, the $N_{SC,g}^{SSSB}$ subcarriers may correspond to $N_{SC,g}^{SSSB}$ consecutive subcarriers, starting from the first subcarrier of a certain PRB, in the SL BWP.

For $g \in \{0, 1, ..., N_{SC,GRP}^{SSSB} - 1\}$, $N_{SC,g}^{SSSB}$ subcarriers in the subcarrier group $g$ may be non-consecutive (or partially consecutive) subcarriers.

When the $N_{SC,ALL}^{SSSB}$ subcarriers are to be indexed, all of the subcarriers in the first subcarrier group (i.e., the subcarrier group 0) may be indexed first, then all of the subcarriers in the second subcarrier group (i.e., the subcarrier group 1) may be indexed, ..., and finally all of the subcarriers in the $N_{SC,GRP}^{SSSB}$-th subcarrier group (i.e., the subcarrier group $N_{SC,GRP}^{SSSB} - 1$) may be indexed. For each subcarrier group, indexing may be performed in ascending order of indexes of corresponding subcarriers in the subcarrier group. For example, $N_{SCPG}^{SSSB} = 132$, $N_{SC,GRP}^{SSSB} = 2$. Accordingly, $N_{SC,ALL}^{SSSB} = N_{SCPG}^{SSSB} \cdot N_{SC,GRP}^{SSSB} = 264$. For the 264 subcarriers, the subcarriers in the subcarrier group 0 are respectively indexed as 0, 1, ..., 131 in ascending order of the indexes thereof in the subcarrier group 0, and then the subcarriers in the subcarrier group 1 are respectively indexed as 132, 133, ..., 263 in ascending order of the indexes thereof in the subcarrier group 1.

A "basic subcarrier group" (e.g., the subcarrier group 0) may be predefined or configured or pre-configured in the $N_{SC,GRP}^{SSSB}$ subcarrier groups. For each symbol of an S-SS/PSBCH block to be transmitted, resource elements (REs) corresponding to the subcarriers in the basic subcarrier group may be respectively copied to REs corresponding to the subcarriers in each other subcarrier group (for example, for each other subcarrier group g, the REs respectively corresponding to the subcarriers 0, 1, ..., $N_{SCPG}^{SSSB} - 1$ in the basic subcarrier group are respectively copied to the REs respectively corresponding to the subcarriers 0, 1, ..., $N_{SCPG}^{SSSB} - 1$ in the subcarrier group g). Specifically, for example, $N_{SC,GRP}^{SSSB} = 3$ and $N_{SCPG}^{SSSB} = 132$. Accordingly, for each symbol of an S-SS/PSBCH block, the S-SS/PSBCH block may be first mapped to REs corresponding to the subcarriers 0, 1, ..., 131 in the basic subcarrier group (e.g., the subcarrier group 0), then REs respectively corresponding to the subcarriers 0, 1, ..., 131 in the basic subcarrier group are respectively copied to REs respectively corresponding to the subcarriers 0, 1, ..., 131 in the subcarrier group 1, and then REs respectively corresponding to the subcarriers 0, 1, ..., 131 in the basic subcarrier group are respectively copied to REs corresponding to the subcarriers 0, 1, ..., 131 in the subcarrier group 2.

An "anchor subcarrier" may be determined in the $N_{SC,ALL}^{SSSB}$ subcarriers. For example, the index of the anchor subcarrier in an S-SS/PSBCH block may be denoted as $sc_{anc}^{SSSB}$, where $sc_{anc}^{SSSB} \in \{0, 1, ..., N_{SC,ALL}^{SSSB} - 1\}$. $sc_{anc}^{SSSB}$ may be a predefined or configured or pre-configured value, or may be determined by one or more predefined or configured or pre-configured values. For example, $sc_{anc}^{SSSB} = 66$, or $sc_{anc}^{SSSB} = 120$, or $sc_{anc}^{SSSB} = 0$. As another example, $sc_{anc}^{SSSB} = N_{SC,ALL}^{SSSB} - 1$. As another example, $sc_{anc}^{SSSB} = N_{SC,ALL}^{SSSB}/2$. As another example, $sc_{anc}^{SSSB} = \lfloor N_{SCPG}^{SSSB}/2 \rfloor$. As another example, $sc_{anc}^{SSSB} = \lceil N_{SC,ALL}^{SSSB}/2 \rceil$.

The anchor subcarrier may be a predefined or configured or pre-configured subcarrier (e.g., indexed as $sc_{g_0,s_0}^{SSSB}$ in the subcarrier group $g_0$) in a predefined or configured or pre-configured subcarrier group (e.g., indexed as $g_0$) in an S-SS/PSBCH block. For example, $g_0 = 0$. As another example, $g_0$ corresponds to the basic subcarrier group. As another example, $sc_{g_0,s_0}^{SSSB} = N_{SC,g_0}^{SSSB} - 1$. As another example, $sc_{g_0,s_0}^{SSSB} = 0$. As another example, $sc_{g_0,s_0}^{SSSB} = N_{SC,g_0}^{SSSB}/2$. As another example, $sc_{g_0,s_0}^{SSSB} = \lfloor N_{SC,g_0}^{SSSB}/2 \rfloor$. As another example,

$$sc_{g_0,s_0}^{SSSB} = \lceil N_{SC,g_0}^{SSSB}/2 \rceil$$

The "information related to S-SS/PSBCH block transmission (or reception)" may include $N_{freq}^{SSSB}$ "S-SS/PSBCH block frequency locations" (or referred to as "candidate S-SS/PSBCH block frequency locations"). Each "S-SS/PSBCH block frequency location" may be used to determine the frequency location of one S-SS/PSBCH block to be transmitted (or received) (e.g., determining the frequency location of each subcarrier in the S-SS/PSBCH block). $N_{freq}^{SSSB}$ may be a predefined or configured or pre-configured value, or may be determined according to one or more predefined or configured or pre-configured values.

One or more of the following limitations may be applied to $N_{freq}^{SSSB}$:

- 
$$N_{freq}^{SSSB} \geq 1$$

- 
$$N_{freq}^{SSSB} \leq N_{RBset}^{BWP}$$

The unit of the "S-SS/PSBCH block frequency location" may be Hz, or kHz, or MHz, or the like, and accordingly, the $N_{freq}^{SSSB}$ S-SS/PSBCH block frequency locations may be respectively denoted as $f_0^{SSSB}$, $f_1^{SSSB}$, ......, $f_{N_{freq}^{SSSB}-1}^{SSSB}$ in ascending order of frequencies.

For $k \in \{0, 1, ..., N_{freq}^{SSSB} - 1\}$, $f_k^{SSSB}$ may correspond to an NR absolute radio frequency channel number (NR-ARFCN), denoted as, for example, $arf_k^{SSSB}$. For example, $arf_k^{SSSB}$ may be a value in the integer range [0, 3279165].

For $k \in \{0, 1, ..., N_{freq}^{SSSB} - 1\}$, $f_k^{SSSB}$ may correspond to an anchor subcarrier denoted as, for example, $anc_k^{SSSB}$ in an S-SS/PSBCH block (or referred to as a "candidate S-SS/PSBCH block"). For example, $f_k^{SSSB}$ may correspond to the center frequency of the anchor subcarrier $anc_k^{SSSB}$, and the unit of the center frequency may be Hz, or kHz, or MHz, or the like. For $k_1 \in \{0, 1, ..., N_{freq}^{SSSB} - 1\}$, $k_2 \in \{0, 1, ..., N_{freq}^{SSSB} - 1\}$ and k1 ≠ k2, the method for determining the subcarrier index of $anc_{k_1}^{SSSB}$ in the corresponding S-SS/PSBCH block may be the same as the method for determining the subcarrier index of $anc_{k_2}^{SSSB}$ in the corresponding S-SS/PSBCH block. For example, the subcarrier indexes of $anc_{k_1}^{SSSB}$ and $anc_{k_2}^{SSSB}$ in the respective corresponding S-SS/PSBCH blocks are both equal to $N_{SC,ALL}^{SSSB}/2$.

For $k \in \{0, 1, ..., N_{freq}^{SSSB} - 1\}$, one or more of the following limitations may be applied to $f_k^{SSSB}$ and/or the frequency location of the corresponding S-SS/PSBCH block:

- $f_k^{SSSB}$ (or $arf_k^{SSSB}$) is in the bandwidth of the SL BWP.
- $anc_k^{SSSB}$ is in the SL BWP.
- The S-SS/PSBCH block corresponding to $f_k^{SSSB}$ (or $arf_k^{SSSB}$, or $anc_k^{SSSB}$) is in the SL BWP.
- $f_k^{SSSB}$ (or $arf_k^{SSSB}$) is in the bandwidth of the RB set $rs_{a_k}^{BWP}$ in the SL BWP.
- $anc_k^{SSSB}$ is in the RB set $rs_{a_k}^{BWP}$ in the SL BWP.
- The S-SS/PSBCH block corresponding to $f_k^{SSSB}$ (or $arf_k^{SSSB}$, or $anc_k^{SSSB}$) is in the RB set $rs_{a_k}^{BWP}$ in the SL BWP.
- $f_k^{SSSB}$ (or $arf_k^{SSSB}$) is not in the bandwidth of any guard band (if any) in the SL BWP.
- $anc_k^{SSSB}$ is not in any guard band (if any) in the SL BWP.
- The S-SS/PSBCH block corresponding to $f_k^{SSSB}$ (or $arf_k^{SSSB}$, or $anc_k^{SSSB}$) is not in any guard band (if any) in the SL BWP.

Wherein

- 

$$a_k \in \{0, 1, ..., N_{RBset}^{BWP} - 1\}.$$

- $a_k$ may be determined in a predefined or configured or pre-configured manner.
- For $k_1 \in \{0, 1, ..., N_{freq}^{SSSB} - 1\}$ and $k_2 \in \{0, 1, ..., N_{freq}^{SSSB} - 1\}$, one or more of the following limitations may be applied to the relationship between $a_{k_1}$ and $a_{k_2}$:

  - If $k_1 \neq k_2$, then $a_{k_1} \neq a_{k_2}$.
  - If $k_2 = k_1 + 1$, then $a_{k_2} = a_{k_1} + 1$.
  - If $k_2 = k_1 + 1$, then $a_{k_2} = (a_{k_1} + 1) \bmod N_{RBset}^{BWP}$.

■ An offset between the first subcarrier of the first RB of $rs^{BWP}_{a_{k_1}}$ and $anc^{SSSB}_{k_1}$ is equal to an offset between the first subcarrier of the first RB of $rs^{BWP}_{a_{k_2}}$ and $anc^{SSSB}_{k_2}$ .

■ An offset between $anc^{SSSB}_{k_1}$ and the last subcarrier of the last RB of $rs^{BWP}_{a_{k_1}}$ is equal to an offset between $anc^{SSSB}_{k_2}$ and the last subcarrier of the last RB of $rs^{BWP}_{a_{k_2}}$ .

■ If $k_1 = 2 \cdot z$, $k_2 = 2 \cdot z + 1$, and $z \in \left\{ 0, \ 1, \ \cdots, \ \left\lceil \frac{N^{SSSB}_{freq}}{2} \right\rceil - 1 \right\}$, an offset between the last subcarrier of the S-SS/PSBCH block corresponding to $f^{SSSB}_{k_1}$ (or $arf^{SSSB}_{k_1}$ ) and the last subcarrier of the last RB of the RB set $rs^{BWP}_{a_{k_1}}$ is equal to an offset between the first subcarrier of the first RB of the RB set $rs^{BWP}_{a_{k_2}}$ and the first subcarrier of the S-SS/PSBCH block corresponding to $f^{SSSB}_{k_2}$ , (or $arf^{SSSB}_{k_2}$ ).

■ If $k_1 = 2 \cdot z$, $k_2 = 2 \cdot z + 1$, and $z \in \left\{ 0, \ 1, \ \cdots, \ \left\lceil \frac{N^{SSSB}_{freq}}{2} \right\rceil - 1 \right\}$, an offset between the first subcarrier of the S-SS/PSBCH block corresponding to $f^{SSSB}_{k_1}$ (or $arf^{SSSB}_{k_1}$ ) and the last subcarrier of the S-SS/PSBCH block corresponding to $f^{SSSB}_{k_2}$ (or $arf^{SSSB}_{k_2}$ ) is less than (or, less than or equal to) the bandwidth of any RB set in the set $RS_{BWP}$.

$f^{SSSB}_0$ (or $arf^{SSSB}_0$, or $anc^{SSSB}_0$), $f^{SSSB}_1$ (or $arf^{SSSB}_1$, or $anc^{SSSB}_1$) , ..., and $f^{SSSB}_{N^{SSSB}_{freq}-1}$ (or $arf^{SSSB}_{N^{SSSB}_{freq}-1}$, or $anc^{SSSB}_{N^{SSSB}_{freq}-1}$) may be respectively configured or pre-configured via, for example, elements (e.g., respectively denoted as *sl-SSBLocations[0], sl-SSBLocations[1], ..., sl-SSBLocations[$N^{SSSB}_{freq} - 1$])* in a sequence corresponding to a higher-layer parameter (e.g., denoted as *sl-SSBLocations).* For $k \in \{0, \ 1, \ \cdots, \ N^{SSSB}_{freq} - 1\}$, the value of *sl-SSBLocations[k]* may be an NR-ARFCN, or a subcarrier offset (e.g., an offset from the subcarrier 0 of the CRB 0 to $anc^{SSSB}_k$ , or an offset from the subcarrier 0 of the PRB 0 of the SL BWP to $anc^{SSSB}_k$ , or an offset from the first subcarrier of the first RB of the RB set $rs^{BWP}_k$ to $anc^{SSSB}_k$ , or an offset from $anc^{SSSB}_k$ to the last subcarrier of the last RB of the RB set $rs^{BWP}_k$ , or the like), or an offset defined in another manner.

One of $f^{SSSB}_0$ (or $arf^{SSSB}_0$, or $anc^{SSSB}_0$), $f^{SSSB}_1$ (or $arf^{SSSB}_1$, or $anc^{SSSB}_1$) , ..., and $f^{SSSB}_{N^{SSSB}_{freq}-1}$ (or $arf^{SSSB}_{N^{SSSB}_{freq}-1}$, or $anc^{SSSB}_{N^{SSSB}_{freq}-1}$) may be used to determine other $N^{SSSB}_{freq} - 1$ (for example, when $N^{SSSB}_{freq} \geq 2$). For example, $anc^{SSSB}_0$ may be configured or pre-configured via a higher-layer parameter (e.g., denoted as *sl-SSBLocations0),* and for $k \in \{1, \ \cdots, \ N^{SSSB}_{freq} - 1\}$, $anc^{SSSB}_k$ may be determined according to $anc^{SSSB}_0$ . Specifically, for example, the subcarrier index of $anc^{SSSB}_k$ in the RB set $rs^{BWP}_{a_k}$ may be equal to the subcarrier index of $anc^{SSSB}_0$ in the RB set $rs^{BWP}_{a_0}$ .

One SL synchronization configuration may correspond to one or more time allocations for S-SS/PSBCH block transmission (or reception). The period of each time allocation may be denoted as $T_{TAP}$ frames, where $T_{TAP}$ may be a predefined or configured or pre-configured value, e.g., $T_{TAP}$ = 16. One frame number period may include $N_{TAP} = T_{FNP}$ /

$T_{TAP}$ time allocation periods, e.g., $N_{TAP} = \frac{1024}{16} = 64$ . The indexes of the time allocation periods in one frame number period may be denoted as $n_{TA}$ ($n_{TA} \in \{0, 1, ..., N_{TAP} - 1\}$). The slot indexes in one time allocation period may be respectively denoted as $0, 1, ..., N_{slot}^{TAP,\mu} - 1$ , in chronological order, wherein $N_{slot}^{TAP,\mu}$ may be equal to $T_{TAP} \cdot N_{slot}^{frame,\mu}$ (e.g., $16 \cdot (10 \cdot 2^{\mu})$) .

For each time allocation, $N_{period}^{SSSB}$ S-SS/PSBCH block indexes may be present in one time allocation period, and are respectively denoted as, for example, $0, 1, ..., N_{period}^{SSSB} - 1$ in chronological order. In a time allocation period, for the S-SS/PSBCH block (or referred to as the "candidate S-SS/PSBCH block") indexed as $b_{period}^{SSSB}$ ($b_{period}^{SSSB} \in \{0, 1, ..., N_{period}^{SSSB} -$ 1\}), the index (e.g., denoted as $n_{period}^{SSSB}$ , wherein $n_{period}^{SSSB} \in \{0, 1, ..., N_{slot}^{TAP,\mu} - 1\}$) of the slot thereof in the time allocation period may be equal to $N_{offset}^{SSSB} + (N_{interval}^{SSSB} + 1) \cdot b_{period}^{SSSB}$ , wherein $N_{interval}^{SSSB}$ may be a predefined or configured or pre-configured slot interval, and $N_{offset}^{SSSB}$ may be a predefined or configured or pre-configured slot offset.

For $k \in \{0, 1, ..., N_{freq}^{SSSB} - 1\}$, $f_k^{SSSB}$ (or $arf_k^{SSSB}$ , or $anc_k^{SSSB}$ , or $rs_{a_k}^{BWP}$ ) may be related to an S-SS/PSBCH block transmission (or reception) time (e.g., one or more of the following):

● A slot for S-SS/PSBCH block transmission (or reception). The index of the slot may be represented using an index ( $n_s^{\mu}$ ) thereof in a corresponding subframe, or an index ( $n_{s,f}^{\mu}$ ) thereof in a corresponding frame, or an index ( $n_{s,f,p}^{\mu}$ ) thereof in a corresponding frame number period, or an index ( $n_{period}^{SSSB}$ )thereof in a corresponding time allocation period.
● A subframe where the slot for S-SS/PSBCH block transmission (or reception) is located.
● A frame where the slot for S-SS/PSBCH block transmission (or reception) is located.
● A time allocation period in which the slot for S-SS/PSBCH block transmission (or reception) is located. The index of the time allocation period may be represented using an index ($n_{TA}$) thereof in a corresponding frame number period.
● The index ( $b_{period}^{SSSB}$ ) of the transmitted (or received) S-SS/PSBCH block.

Specifically, for example, the index ($a_k$) of the RB set ( $rs_{a_k}^{BWP}$ ) where $f_k^{SSSB}$ is located may be defined as one or more of the following:

● For $0 \le k \le N_{freq}^{SSSB} - 1$, $a_k = (t + k) \bmod N_{RBset}^{BWP}$ .
● For k = 0, $a_k = t \bmod (N_{RBset}^{BWP} - N_{freq}^{SSSB} + 1)$ .
● For $0 < k \le N_{freq}^{SSSB} - 1$ , $a_k = a_{k-1} + 1$.

$t$ may be $n_s^{\mu}$ , or $n_{s,f}^{\mu}$ , or $n_{s,f,p}^{\mu}$ , or $n_{period}^{SSSB}$ , or $n_{TA}$, or $b_{period}^{SSSB}$ .
Further, in step S103, the S-SS/PSBCH block transmission (or reception) is performed.
For example, S-SS/PSBCH block(s) is detected and/or received according to the "information related to S-SS/PSBCH block transmission (or reception)". Specifically, for example, S-SS/PSBCH block(s) is detected and/or received in a slot $n_{period}^{SSSB}$ corresponding to an S-SS/PSBCH block index $b_{period}^{SSSB}$ in a time allocation period in S-SS/PSBCH block frequency location(s) respectively corresponding to one or a plurality (e.g., denoted as $N_{rcvd}^{SSSB}$ ) of

$f_0^{SSSB}$ (or $arf_0^{SSSB}$, or $anc_0^{SSSB}$), $f_1^{SSSB}$ (or $arf_1^{SSSB}$, or $anc_1^{SSSB}$), ..., or $f_{N_{freq}^{SSSB}-1}^{SSSB}$ (or $arf_{N_{freq}^{SSSB}-1}^{SSSB}$, or $anc_{N_{freq}^{SSSB}-1}^{SSSB}$). $N_{rcvd}^{SSSB}$ may be a value in the integer range $[1, N_{freq}^{SSSB}]$. For example, $N_{rcvd}^{SSSB} = 1$. The value of $N_{rcvd}^{SSSB}$ may relate to the capabilities of the UE.

As another example, S-SS/PSBCH block(s) is transmitted according to the "information related to S-SS/PSBCH block transmission (or reception)". Specifically, for example, in a slot $n_{period}^{SSSB}$ corresponding to an S-SS/PSBCH block index $b_{period}^{SSSB}$ in a time allocation period, $N_{txd}^{SSSB}$ RB sets for transmitting the S-SS/PSBCH block are determined from $rs_{a_0}^{BWP}$, $rs_{a_1}^{BWP}$, ......, $rs_{a_{N_{freq}^{SSSB}-1}}^{BWP}$ and the S-SS/PSBCH block(s) is respectively transmitted in corresponding S-SS/PSBCH block frequency locations in the $N_{txd}^{SSSB}$ RB sets. $N_{txd}^{SSSB}$ may be a value in the integer range $[1, N_{freq}^{SSSB}]$. For example, $N_{txd}^{SSSB} = 1$. The value of $N_{txd}^{SSSB}$ may relate to the capabilities of the UE.

The $N_{txd}^{SSSB}$ RB sets may be autonomously determined by the UE.

The $N_{txd}^{SSSB}$ RB sets may be determined via random selection. For example, $N_{txd}^{SSSB}$ RB sets for S-SS/PSBCH block transmission are randomly selected from $rs_{a_0}^{BWP}$, $rs_{a_1}^{BWP}$, ......, $rs_{a_{N_{freq}^{SSSB}-1}}^{BWP}$.

The $N_{txd}^{SSSB}$ RB sets may be determined by performing channel access. For example, first, one channel access procedure (e.g., when $N_{freq}^{SSSB} = 1$) is performed for a "channel" corresponding to $rs_{a_0}^{BWP}$, or "a multi-channel access procedure" (e.g., when $N_{freq}^{SSSB} > 1$) is performed for "channels" respectively corresponding to $rs_{a_0}^{BWP}$, $rs_{a_1}^{BWP}$, ......, $rs_{a_{N_{freq}^{SSSB}-1}}^{BWP}$ and $N_{accOK}^{SSSB}$ channels of which channel access is successful are determined according to a result of the channel access procedure or "the multi-channel access procedure", wherein $N_{accOK}^{SSSB} \in \{0, 1, ..., N_{freq}^{SSSB}\}$. Then, $N_{txd}^{SSSB}$ RB sets for S-SS/PSBCH block transmission are determined among the $N_{accOK}^{SSSB}$ RB sets. For example, $N_{txd}^{SSSB}$ RB sets for S-SS/PSBCH block transmission are randomly selected from the $N_{accOK}^{SSSB}$ RB sets.

Thus, according to description of Embodiment 1, provided in the present invention is a method. More than one frequency location for an S-SS/PSBCH block is allowed to be configured, and the S-SS/PSBCH block corresponding to each frequency location is within a bandwidth of a unique RB set within an SL BWP, so that the probability that the S-SS/PSBCH block can still be transmitted when one or more channel access failures occur within the SL BWP is greatly increased, thereby improving the stability of a synchronization procedure of an SL link.

**[Variant Embodiment]**

Hereinafter, FIG. 2 is used to illustrate user equipment that can perform the method performed by user equipment described in detail above in the present invention as a variant embodiment.

FIG. 2 is a block diagram showing user equipment (UE) according to the present invention.

As shown in FIG. 2, user equipment (UE) 20 includes a processor 201 and a memory 202. The processor 201 may include, for example, a microprocessor, a microcontroller, an embedded processor, and the like. The memory 202 may include, for example, a volatile memory (such as a random access memory (RAM)), a hard disk drive (HDD), a non-volatile memory (such as a flash memory), or other memories. etc. The memory 202 has program instructions stored thereon. The instructions, when run by the processor 201, can perform the above method performed by user equipment described in detail in the present invention.

The method and related equipment according to the present invention have been described above in combination with preferred embodiments. It should be understood by those skilled in the art that the method shown above is only exemplary, and the above embodiments can be combined with one another as long as no contradiction arises. The method of the present invention is not limited to the steps or sequences illustrated above. The network node and user equipment shown above may include more modules, for example, modules that may be developed or developed in the future and that may be used for a base station, an Access and Mobility Management Function (AMF), a User Plane Function (UPF), a Mobility Management Entity (MME), a Serving Gateway (S-GW), or a UE. Various identifiers shown above are only exemplary, and are not meant for limiting the present invention. The present invention is not limited to specific information elements serving as examples of these identifiers. A person skilled in the art could make various alterations and modifications according to the teachings of the illustrated embodiments. Those skilled in the art should understand that part or all of the mathematical expressions, mathematical equations, or mathematical inequations may be simplified or transformed or rewritten to some extent, for example, incorporating constant terms, or interchanging two addition terms, or interchanging two multiplication terms, or moving a term from the left side of an equation or inequation to the right side after changing the plus or minus sign thereof, or moving a term from the right side of an equation or inequation to the left side after changing the plus or minus sign thereof or the like. Mathematical expressions, mathematical equations, or mathematical inequations before and after the simplification or transformation or rewriting may be considered to be equivalent to each other.

It should be understood that the above-described embodiments of the present invention may be implemented by software, hardware, or a combination of software and hardware. For example, various components in the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

In the present invention, the term "base station" may refer to a mobile communication data and/or control switching center having specific transmission power and a specific coverage area, and, for example, has functions such as resource allocation and scheduling, and data reception and transmission. "User equipment" may refer to user mobile terminals, such as terminal devices that can communicate with a base station or a micro base station wirelessly, including a mobile phone, a laptop computer, and the like.

In addition, the embodiments of the present invention disclosed herein may be implemented on a computer program product. More specifically, the computer program product is a product provided with a computer-readable medium having computer program logic encoded thereon. When executed on a computing device, the computer program logic provides related operations to implement the above technical solutions of the present invention. When executed on at least one processor of a computing system, the computer program logic causes the processor to perform the operations (the method) described in the embodiments of the present invention. Such setting of the present invention is typically provided as software, codes and/or other data structures provided or encoded on the computer-readable medium, e.g., an optical medium (e.g., compact disc read-only memory (CD-ROM)), a flexible disk or a hard disk and the like, or other media such as firmware or micro codes on one or more read-only memory (ROM) or random access memory (RAM) or programmable read-only memory (PROM) chips, or a downloadable software image, a shared database and the like in one or more modules. Software or firmware or such configuration may be installed on a computing device such that one or more processors in the computing device perform the technical solutions described in the embodiments of the present invention.

In addition, each functional module or each feature of the base station device and the terminal device used in each of the above embodiments may be implemented or executed by circuits, which are usually one or more integrated circuits. Circuits designed to execute various functions described in this description may include general-purpose processors, digital signal processors (DSPs), application-specific integrated circuits (ASICs) or general-purpose integrated circuits, field-programmable gate arrays (FPGAs) or other programmable logic devices, discrete gates or transistor logic, or discrete hardware components, or any combination of the above. The general-purpose processor may be a microprocessor, or the processor may be an existing processor, a controller, a microcontroller, or a state machine. The aforementioned general-purpose processor or each circuit may be configured by a digital circuit or may be configured by a logic circuit. Furthermore, when advanced technology capable of replacing current integrated circuits emerges due to advances in semiconductor technology, the present invention can also use integrated circuits obtained using this advanced technology.

While the present invention has been illustrated in combination with the preferred embodiments of the present invention, it will be understood by those skilled in the art that various modifications, substitutions, and alterations may be made to the present invention without departing from the spirit and scope of the present invention. Therefore, the present invention should not be limited by the above-described embodiments, but should be defined by the appended claims and their equivalents.

**Claims**

1. A method performed by user equipment (UE), **characterized by** comprising:

   determining one or more frequency locations within one SL BWP for S-SS/PSBCH block reception, wherein each frequency location corresponds to a center frequency of one subcarrier in one S-SS/PSBCH block, and a bandwidth of the S-SS/PSBCH block is within a bandwidth of a unique RB set within the SL BWP; and
   receiving the S-SS/PSBCH block in part or all of the one or more frequency locations.

2. User equipment, comprising:

   a processor; and
   a memory, having instructions stored therein,
   wherein the instructions, when run by the processor, perform the method according to claim 1.

Acquire and/or determine information related to S-SS/PSBCH block transmission (or reception) — S101

Perform the S-SS/PSBCH block transmission (or reception) — S103

## FIG. 1

UE20

| Processor 201 | Memory 202 |

## FIG. 2

## INTERNATIONAL SEARCH REPORT

| International application No. |
| --- |
| **PCT/CN2023/103860** |

**A.   CLASSIFICATION OF SUBJECT MATTER**

H04W76/14(2018.01)i

According to International Patent Classification (IPC) or to both national classification and IPC

**B.   FIELDS SEARCHED**

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

CNABS, CNKI, VEN, VCN, 3GPP: SL BWP, S-SS, PSBCH, SL SSB, S-SSB, 频率, 位置, 子载波, 带宽, 资源块, 集, frequency, location, position, subcarrier, bandwidth, RB, set

**C.   DOCUMENTS CONSIDERED TO BE RELEVANT**

| Category* | Citation of document, with indication, where appropriate, of the relevant passages | Relevant to claim No. |
| --- | --- | --- |
| Y | CN 111356238 A (SHARP KABUSHIKI KAISHA et al.) 30 June 2020 (2020-06-30) description, paragraphs 2-102 and 112-828 | 1-2 |
| Y | US 2021368460 A1 (QUALCOMM INC.) 25 November 2021 (2021-11-25) description, paragraphs 79-96 | 1-2 |
| Y | ITL. "Considerations on sidelink synchronization for NR V2X" *3GPP TSG RAN WG1 Meeting #95 R1-1813493*, 16 November 2018 (2018-11-16), sections 1-6 | 1-2 |
| A | CATT. "Feature lead summary on AI 7.2.4.3 Sidelink synchronization mechanism Agenda Item: 7.2.4.3" *3GPP TSG RAN WG1 Meeting #98bis R1-1911714*, 20 October 2019 (2019-10-20), entire document | 1-2 |
| A | SAMSUNG. "On Synchronization Mechanisms for NR Sidelink" *3GPP TSG RAN WG1 #100e R1-2000619*, 06 March 2020 (2020-03-06), entire document | 1-2 |

☐ Further documents are listed in the continuation of Box C.　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 September 2023** | **21 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103860**

| Patent document cited in search report | | | Publication date (day/month/year) | Patent family member(s) | | | Publication date (day/month/year) |
|---|---|---|---|---|---|---|---|
| CN | 111356238 | A | 30 June 2020 | EP | 3905842 | A1 | 03 November 2021 |
| | | | | EP | 3905842 | A4 | 06 July 2022 |
| | | | | WO | 2020135417 | A1 | 02 July 2020 |
| | | | | KR | 20210104841 | A | 25 August 2021 |
| | | | | US | 2022053442 | A1 | 17 February 2022 |
| US | 2021368460 | A1 | 25 November 2021 | WO | 2021236969 | A1 | 25 November 2021 |
| | | | | EP | 4154461 | A1 | 29 March 2023 |
| | | | | CN | 115606144 | A | 13 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- New WI proposal: Support for V2V services based on LTE sidelink. *RP-152293*
- New WID on 3GPP V2X Phase 2. *RP-170798*
- New WID on New Radio Access Technology. *RP-170855*
- New WID on 5G V2X with NR sidelink. *RP-190766*
- WID revision: NR sidelink enhancement. *RP-201385*
- New WID on NR sidelink evolution. *RP-213678*